(19) Europäisches Patentamt / European Patent Office / Office européen des brevets

(11) **EP 2 378 258 B1**

(12) **FASCICULE DE BREVET EUROPEEN**

(45) Date de publication et mention
de la délivrance du brevet:
**07.10.2015 Bulletin 2015/41**

(51) Int Cl.:
**G01J 5/20** *(2006.01)*     **G01J 5/22** *(2006.01)*
**G01J 5/24** *(2006.01)*     **H04N 5/33** *(2006.01)*

(21) Numéro de dépôt: **11162022.5**

(22) Date de dépôt: **12.04.2011**

(54) **Dispositif de détection de rayonnement électromagnétique à sensibilité réduite au bruit spatial**

Detektor für elektromagnetische Strahlung aufweisend eine reduzierte Empfindlichkeit gegen räumliches Rauschen

Detector for electromagnetic radiation with reduced sensitivity to spatial noise

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.04.2010 FR 1001618**

(43) Date de publication de la demande:
**19.10.2011 Bulletin 2011/42**

(73) Titulaires:
• **Commissariat à l'Énergie Atomique et aux Énergies Alternatives**
**75015 Paris (FR)**
• **ULIS**
**38113 Veurey Voroize (FR)**

(72) Inventeurs:
• **Yon, Jean-Jacques**
**38360 Sassenage (FR)**
• **Robert, Patrick**
**38140 Reaumont (FR)**

(74) Mandataire: **Ilgart, Jean-Christophe et al**
**BREVALEX**
**95, rue d'Amsterdam**
**75378 Paris Cedex 8 (FR)**

(56) Documents cités:
**US-B1- 7 679 048**

• **TISSOT J -L ET AL: "LETI/LIR's amorphous silicon uncooled microbolometer development", PROCEEDINGS OF THE SPIE, vol. 3379, avril 1998 (1998-04), pages 139-144, XP002615407, SPIE-INT. SOC. OPT. ENG. USA ISSN: 0277-786X, DOI: 10.1117/12.317580**

**Description**

## DESCRIPTION

### DOMAINE TECHNIQUE

L'invention concerne le domaine des dispositifs de détection de rayonnement électromagnétique. Elle s'applique avantageusement aux dispositifs de détection de rayonnement infrarouge à base de bolomètres ou microbolomètres, mais elle concerne aussi les dispositifs de détection de rayonnement électromagnétique à base de photodiodes ou de photoconducteurs. Son domaine d'utilisation couvre en particulier la réalisation de rétines électroniques, encore appelées imageurs, qui peuvent être constituées d'un grand nombre de détecteurs élémentaires. Par microbolomètre on entend un bolomètre dont au moins une dimension est micrométrique ; il s'agit en particulier d'un bolomètre dont la réalisation fait appel aux techniques de la microélectronique ou des micro technologies et/ou nano technologies.

### ÉTAT DE LA TECHNIQUE ANTÉRIEURE

Les dispositifs de détection les plus avancés pour la détection et l'imagerie des rayonnements électromagnétiques reposent sur l'utilisation d'une matrice de détecteurs élémentaires agencés en au moins une ligne et/ou au moins une colonne.

Un système optique, constitué d'un assemblage de différents dioptres, est généralement intercalé entre une source de rayonnement que l'on souhaite détecter et un plan contenant les détecteurs élémentaires. Ce système optique a pour fonction de courber des rayons incidents de manière à les focaliser sur les détecteurs élémentaires et à reproduire une image de la source, sur le plan de détection. Chaque détecteur élémentaire reçoit ainsi de manière simultanée une information qui est caractéristique d'une quantité de rayonnement électromagnétique reçue par le dispositif sous une incidence particulière. La lecture de signaux délivrés par les différents détecteurs élémentaires de la matrice permet de restituer une cartographie à deux dimensions, dite image, du rayonnement électromagnétique émis par la source.

Pour procéder à une lecture des signaux délivrés par les détecteurs élémentaires, on prévoit un circuit électronique disposant d'autant d'entrées du signal qu'il y a de détecteurs élémentaires sur le dispositif de détection. Ce circuit électronique, appelé circuit de lecture, peut être constitué d'un circuit intégré en technologie microélectronique CMOS, BICMOS ou en technologie microélectronique CCD.

Dans la suite de l'invention, un pixel est défini comme comprenant un unique détecteur élémentaire et des composants électriques propres à ce détecteur élémentaire reliant ce détecteur élémentaire au circuit de lecture. Ces composants électriques peuvent être des interconnexions, des liaisons électriques, des interrupteurs ou des dispositifs d'adaptation d'impédance. Un pixel peut aussi comprendre un circuit de capture et de mise en forme si celui-ci est propre à un unique détecteur élémentaire. Un pas du pixel est défini comme une période entre deux pixels voisins.

Le circuit de lecture et la matrice de détecteurs élémentaires peuvent être fabriqués soit sur un même substrat, constituant un ensemble monolithique, soit sur deux substrats distincts qui sont ensuite interconnectés et ils constituent dans ce cas un ensemble hybride.

Le circuit de lecture réalise, hormis une polarisation des détecteurs élémentaires, trois fonctions pour le fonctionnement du dispositif de détection :

une fonction d'adaptation d'impédance entre chaque détecteur élémentaire et le circuit de lecture proprement dit, effectuée par le dispositif d'adaptation d'impédance,
une fonction de capture et de mise en forme du signal délivré par les détecteurs élémentaires, effectué par le circuit de capture et de mise en forme,
un multiplexage des signaux issus des différents détecteurs élémentaires sous la forme d'un signal électrique unique, effectué généralement par une combinaison d'interrupteurs et de moyens de commande. Le signal électrique unique, appelé signal vidéo, est ensuite apte à être exploité par un système de visualisation.

D'autres fonctions annexes peuvent être intégrées sur le circuit de lecture comme par exemple une fonction de conversion analogique - numérique du signal vidéo.

Former un circuit de lecture comportant les trois fonctions précitées (adaptation d'impédance, capture du signal, multiplexage) est une tâche compliquée nécessitant un agencement complexe des fonctions. En effet, l'agencement des trois fonctions influence grandement le rapport signal/bruit et le rendement des détecteurs élémentaires.

Dans le cas de détecteurs élémentaires photovoltaïques infrarouge, les fonctions d'adaptation d'impédance et de capture et de mise en forme du signal sont généralement localisées au sein de chaque pixel et donc à proximité de chaque détecteur élémentaire, de façon à permettre un point de fonctionnement plus uniforme pour l'ensemble des pixels de la matrice et ainsi diminuer les non-uniformités à l'échelle de la matrice, ces non-uniformités étant encore appelées bruit spatial fixe.

Il y a donc autant de dispositifs d'adaptation d'impédance et de circuits de capture et de mise en forme qu'il y a de détecteurs élémentaires dans la matrice. Dans le cas de détecteurs élémentaires infrarouge à microbolomètres, ou de détecteurs photovoltaïques pour des longueurs d'ondes du visible, la fonction de capture et de mise en forme est généralement délocalisée en périphérie de la matrice, par exemple au bout de chacune des colonnes ou des lignes de la matrice, tandis que la fonction d'adaptation d'impédance reste souvent interne au pixel. L'utilisation de microbolomètres est avantageuse car ils fonctionnent à température ambiante, tandis que des détecteurs élémentaires à photodiodes infrarouge nécessitent souvent une température de travail cryogénique proche de 77 K.

La fonction de multiplexage est quant à elle généralement distribuée entre une première partie localisée dans le pixel, pour effectuer un multiplexage à l'intérieur d'une même colonne ou d'une même ligne et une deuxième partie située avantageusement en pied de colonne ou respectivement de ligne, pour effectuer un multiplexage des différentes colonnes de la matrice ou respectivement des différentes lignes. Une configuration où le multiplexage est réalisé uniquement au niveau du pixel est également possible.

Quelques méthodes permettant de réaliser un couplage électrique d'un détecteur élémentaire infrarouge photovoltaïque à un circuit de lecture sont décrites dans l'article [1] dont les références complètes se trouvent en fin de description.

Parmi les différentes solutions étudiées, il ressort que la fonction d'adaptation d'impédance est avantageusement effectuée par des transistors MOS dans un montage en grille commune ou encore appelé en injection directe, du fait de niveaux de courant élevés circulant dans les détecteurs élémentaires dans leur condition usuelle d'utilisation.

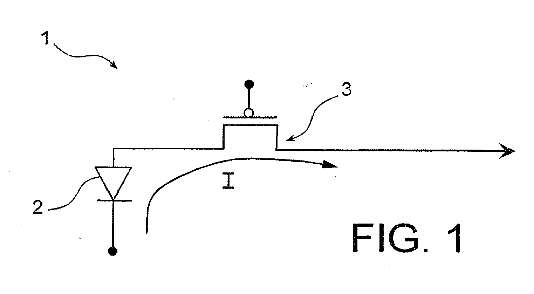

La figure 1 illustre un schéma électrique d'un pixel 1 formé d'un détecteur élémentaire 2, de type photodiode infrarouge, couplé en série avec un dispositif d'adaptation d'impédance 3 du type transistor d'adaptation d'impédance monté en injection directe ayant une source et un drain. L'anode de la photodiode 2 est reliée à une borne d'entrée du dispositif d'adaptation d'impédance, ici la source du transistor d'adaptation 3. Ce montage présente une basse impédance d'entrée qui s'exprime ici comme l'inverse de la valeur de transconductance du transistor d'adaptation 3. Cette valeur de transconductance dépend du courant de polarisation I traversant le transistor d'adaptation 3.

Le montage à injection directe permet l'obtention d'un dispositif d'adaptation d'impédance de taille réduite n'ayant qu'un unique transistor d'adaptation 3 par détecteur élémentaire 2. Il est ainsi possible d'intégrer facilement la fonction d'adaptation d'impédance dans des pixels de taille réduite, ce qui n'est pas le cas, par exemple, de montages d'adaptation d'impédance à base d'amplificateur.

Le dispositif de détection de rayonnement électromagnétique nécessitant, pour être plus performant, des propriétés de linéarité et d'uniformité de sensibilité, le montage en injection directe permet d'améliorer ces propriétés.

Cependant, les contraintes d'intégration et de miniaturisation, imposées par la géométrie du pixel doivent être prises en compte. Comme la taille des pixels tend à diminuer à chaque nouvelle génération de produit, le dispositif d'adaptation d'impédance dispose d'une place de plus en plus limitée à chaque génération technologique.

L'article [2] dont les références se trouvent en fin de description montre des détecteurs élémentaires de type microbolomètre coopérant avec des transistors d'adaptation d'impédance dans un montage par injection directe. Ce montage est retenu car la sensibilité d'un microbolomètre est proportionnelle au courant qui le traverse, ce courant est appelé courant de lecture.

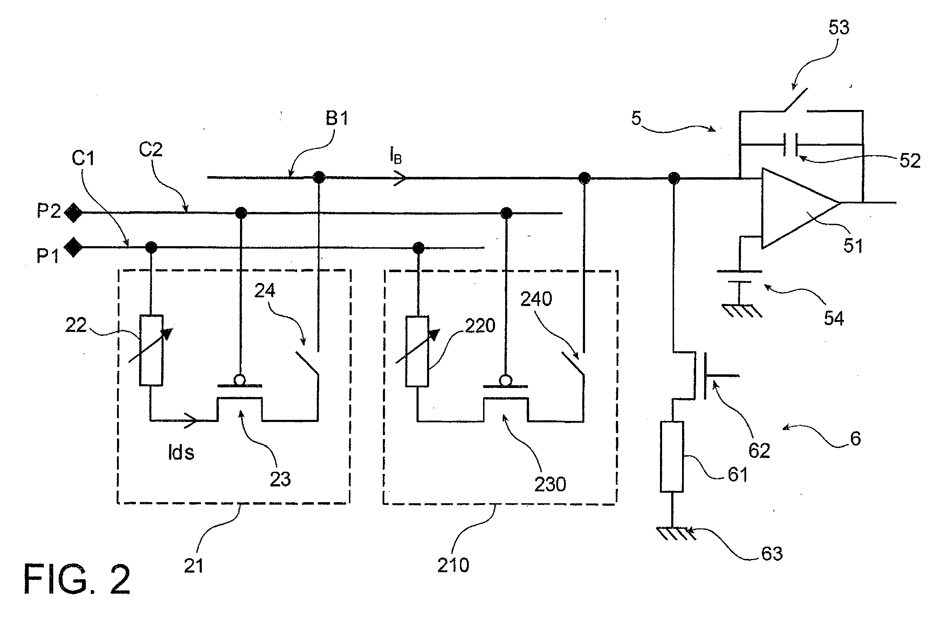

La figure 2 illustre un dispositif de détection de rayonnement électromagnétique utilisant un mode de lecture de détecteurs élémentaires 22, 220 de type microbolomètre par montage en injection directe de transistors d'adaptation 23, 230, de type PMOS, montés en grille commune et associés à chaque détecteur élémentaire 22, 220.

Le dispositif de détection comporte une pluralité de pixels dont deux 21, 210 ont été ici représentés. Chaque pixel comprend un détecteur élémentaire 22, 220 formé par un microbolomètre, ayant une résistance électrique variant avec un rayonnement électromagnétique incident auquel il est exposé, un transistor d'adaptation 23, 230, dans l'exemple décrit de type PMOS, remplissant la fonction d'adaptation d'impédance et un interrupteur 24, 240.

Les microbolomètres 22, 220 sont reliés par une première borne à une borne d'entrée du dispositif d'adaptation d'impédance 23, 230 de leur pixel 21, 210 respectif. Le dispositif d'adaptation d'impédance 23, 230 étant un transistor d'adaptation, ayant une source et un drain, les microbolomètres 22, 220 sont chacun reliés à la source du transistor d'adaptation 23, 230 de leur pixel 21, 210 respectif. Les microbolomètres 22, 220 sont reliés par une seconde borne à une première source de tension commune P1 qui délivre, par l'intermédiaire d'une connexion C1, un courant de lecture Ids traversant les microbolomètres 22, 220. Les drains des transistors PMOS 23, 230 sont reliés respectivement à une première borne des interrupteurs 24, 240, des secondes bornes desdits interrupteurs 24, 240 sont reliées à un bus de lecture B1 commun. Le bus de lecture B1 est relié à un circuit de capture et de mise en forme 5 du signal délivré par les détecteurs élémentaires 22, 220. Les interrupteurs 24, 240 permettent d'isoler un pixel donné du bus de lecture B1.

Le circuit de capture et de mise en forme 5 comporte de manière classique un amplificateur opérationnel 51 ayant une entrée inverseuse reliée au bus B1, une entrée non inverseuse relié à une source de tension 54 et une sortie. Un condensateur 52 est monté entre l'entrée inverseuse et la sortie de l'amplificateur opérationnel 51. Un interrupteur 53 est monté en parallèle avec le condensateur 52.

Les grilles des transistors d'adaptation 23, 230 sont reliées de façon commune par l'intermédiaire d'une connexion électrique C2, à une deuxième source de tension P2 réglée de manière à garantir un fonctionnement en saturation des transistors d'adaptation 23, 230. Le fonctionnement en saturation permet d'obtenir une faible impédance d'entrée telle que recherchée.

Dans un tel montage, quand l'un des interrupteurs 24, 240 est fermé, il s'établit un courant de lecture Ids entre la première source de tension P1 et le bus de lecture B1, dont l'amplitude est modulée par une valeur de résistance du microbolomètre 22, 220 traversé par le courant de lecture Ids. La résistance du microbolomètre 22, 220 dépend du rayonnement électromagnétique incident.

Les interrupteurs 24, 240 peuvent être fermés de manière séquentielle de façon à ne connecter au circuit de capture et de mise en forme 5 qu'un seul microbolomètre 22, 220 à la fois. Cela forme un signal électrique unique qui représente un multiplexage temporel des courants de lecture Ids traversant les différents pixels 21, 210. Cela forme donc un multiplexage temporel de signaux délivrés par les détecteurs élémentaires qui utilisent le même bus de lecture B1 et généralement sont disposés sur une même colonne ou une même ligne. Ce mode de fonctionnement est couramment appelé lecture balayée ou encore « rolling shutter » en anglais.

Un dispositif d'ébasage 6 peut être prévu, il a pour fonction de supprimer une partie du courant de lecture Ids, dite courant de mode commun, qui circule sur le bus de lecture B1 sans porter aucune information relative au rayonnement électromagnétique reçu. La suppression du courant de mode commun, encore appelée ébasage, permet de doter le circuit de capture et de mise en forme 5 du signal d'une plus grande sensibilité. Dans la suite nous appellerons Ids le courant de lecture circulant dans le bus de lecture B1 et dans un détecteur élémentaire 22, 220 au moment de la lecture de ce dit détecteur élémentaire 22, 220.

Dans le cas des microbolomètres, le courant de mode commun dépend fortement d'une température moyenne du dispositif de détection en utilisation. Le dispositif d'ébasage 6 est pour l'essentiel réalisé par une résistance témoin 61, constituée d'un microbolomètre de même nature que les détecteurs élémentaires 22, 220 mais qui est moins sensible au rayonnement électromagnétique. La résistance témoin 61 a une borne reliée par un transistor 62, dans l'exemple décrit de type NMOS, au bus de lecture B1 et une autre borne reliée à une source de tension 63 basse impédance qui peut par exemple être la masse. Le transistor 62 du dispositif d'ébasage a une grille reliée à une source de tension (non représentée) réglée de manière à garantir un fonctionnement en saturation du transistor 62 pour obtenir la faible impédance recherchée en entrée du circuit de capture et de mise en forme 5.

Ce type de microbolomètre 61, dit microbolomètre aveugle, offre la possibilité de procéder à une lecture différentielle avec la résistance de chaque détecteur élémentaire 22, 220. La lecture différentielle permet d'annuler les variations de résistance communes à l'ensemble des microbolomètres 22, 220, 61. Cela permet en particulier de ne pas prendre en compte des variations de résistance dues à des variations de température moyenne, communes à tout le dispositif de détection.

Le dispositif d'ébasage 6 est commun aux différents détecteurs élémentaires 22, 220 qui utilisent le même bus de lecture B1. Lorsqu'un interrupteur 24, 240 est fermé, le courant qui circule dans le bus de lecture B1 est égal au courant de lecture Ids circulant dans le détecteur élémentaire 22, 220 lu. Le transistor NMOS 62 et le microbolomètre aveugle 61 dérivent une majeure partie du courant de mode commun dudit courant de lecture Ids traversant le microbolomètre 22, 220 du pixel 21, 210. En résultat, le circuit de capture et de mise en forme 5 reçoit un courant dans lequel des variations de courant, dites signal délivré par le détecteur élémentaire 22, 220, issues des variations de résistance dues au rayonnement électromagnétique, sont proportionnellement amplifiées.

Les détecteurs élémentaires 22, 220 possédant un rapport signal à bruit, la performance du dispositif de détection de rayonnement électromagnétique se mesure par sa capacité à pouvoir restituer le rapport signal à bruit des détecteurs élémentaires 22, 220 en minimisant des dégradations qui sont propres au circuit de capture et de mise en forme 5, aux transistors d'adaptation 23, 230 et à l'agencement des détecteurs élémentaires 22, 220.

La performance d'un tel dispositif de détection est aussi estimée au moyen d'une qualité de restitution des signaux délivrés par les détecteurs élémentaires. La qualité de restitution se caractérise, dans le cas de détecteurs élémentaires de type microbolomètres par exemple, par le rapport de la variation du courant de lecture Ids causée par le rayonnement électromagnétique, à une variation du courant, obtenu pour un détecteur en court circuit, ayant donc une impédance de lecture nulle, que l'on appelle signal intrinsèque du détecteur. Ce rapport, autrement appelé rendement d'injection Eta, s'exprime par la relation :

$$Eta = \left(G_m \times R_d\right)/\left(1 + G_m \times R_d\right) \qquad \{1\}$$

Où $G_m$ est la transconductance du transistor d'adaptation 23, 230 en injection directe et $R_d$ une valeur de résistance du microbolomètre.

La relation {1} montre qu'un rendement d'injection proche de 100% peut être obtenu dans le cas où l'inverse de la transconductance du transistor d'adaptation 23, 230 est très inférieure à la résistance du microbolomètre 22, 220.

Si l'on veut obtenir un bas niveau de bruit, il faut produire un rendement d'injection de valeur élevée.

En effet le bruit $I_{n\text{-}total}$ en entrée du circuit de capture et de mise en forme 5, résulte principalement d'une part d'un bruit $I_{n\text{-}bolo}$ propre au microbolomètre 22, 220 et d'autre part d'un bruit $I_{n\text{-}tmos}$ intrinsèque au transistor d'adaptation 23, 230, selon la relation :

$$I_{n-total} = \sqrt{\left(Eta \times I_{n-bolo}\right)^2 + \left(\left(1 - Eta\right) \times I_{n-tmos}\right)^2} \qquad \{2\}$$

Pour un rendement d'injection de 100%, l'intégralité du signal intrinsèque du détecteur élémentaire 22, 220 est transmise au circuit de capture et de mise en forme 5, le signal délivré dans le courant de lecture Ids ayant la valeur du signal intrinsèque, et la relation {2} montre que le bruit en entrée du circuit de capture et de mise en forme 5 est égal au bruit du microbolomètre 22, 220. Dans cette situation, on restitue donc parfaitement le rapport signal à bruit du détecteur élémentaire 22, 220.

En revanche, pour un rendement d'injection Eta inférieur à 100%, on observe non seulement un signal délivré plus faible en entrée du circuit de capture et de mise en forme 5 mais, de plus, on observe une contribution plus importante du bruit intrinsèque $I_{n\text{-}tmos}$ du transistor d'adaptation 23, 230 dans le bruit $I_{n\text{-}total}$. Cette combinaison d'effets conduit à une dégradation importante du rapport signal à bruit.

Lorsque la résistance des microbolomètres 22, 220 devient trop faible, inférieure ou égale à l'inverse de la transconductance du transistor d'adaptation 23, 230, le rendement d'injection Eta devient trop faible pour une bonne utilisation du dispositif de détection.

Lorsque le transistor d'adaptation 23, 230 présente un bruit intrinsèque $I_{n\text{-}tmos}$ sensiblement supérieur au bruit propre du microbolomètre $I_{n\text{-}bolo}$, du fait par exemple de l'apparition d'un bruit en 1/f dans le transistor d'adaptation 23, 230, le rapport signal à bruit du dispositif de détection est dégradé.

La relation {3} décrit une évaluation du bruit en 1/f intrinsèque à un transistor d'adaptation ayant une grille de largeur W et de longueur L, ce bruit étant appelé $I_{n\text{-}tmos\text{-}1/f}$.

$$I_{n-tmos-1/f}^2 = \left(K_F \times I_{ds}^{Af}\right)/\left(W \times L\right) \qquad \{3\}$$

La relation {3} montre qu'un bruit important en 1/f peut apparaître lorsque la surface de la grille, c'est à dire le produit de la longueur L par la largeur W, devient petite, ou bien lorsque le courant de lecture Ids traversant le transistor d'adaptation 23, 230 devient trop grand, ou encore lorsque des paramètres Kf et Af, caractéristiques de la technologie MOS utilisée, sont trop élevés.

Ces situations particulières interviennent de manière plus critique, en se cumulant entre elles, avec le développement des générations technologiques avancées de dispositifs de détection de rayonnement électromagnétique comportant des pixels de taille réduite.

Dans la suite de la description, une surface principale d'un détecteur élémentaire désigne une surface du détecteur élémentaire permettant de détecter un rayonnement électromagnétique. Une telle surface est souvent désignée comme étant une surface sensible du détecteur électromagnétique.

Une réduction de la taille du pixel 21, 210 se traduit par une réduction de la surface principale du détecteur et donc par une diminution d'intensité du rayonnement électromagnétique reçue par chaque détecteur élémentaire 22, 220. Cela induit une réduction de sensibilité. On peut compenser cette réduction de sensibilité par une augmentation du courant de lecture Ids dans le microbolomètre 22, 220.

Cependant, un accroissement du courant de lecture Ids augmente de manière concomitante le niveau de bruit en 1/f du transistor d'adaptation 23, 230, comme le montre la relation {3}.

La réduction de la taille du pixel 21, 210 s'accompagne généralement d'une diminution de tensions d'alimentation car leur conception peut utiliser des technologies CMOS de dernière génération où les tensions disponibles sont plus faibles.

Pour compenser cette baisse des tensions d'alimentation, la valeur de la résistance des microbolomètres 22,220 doit être réduite en proportion. Cela conduit, selon la relation {1}, à une diminution du rendement d'injection Eta.

Enfin, la réduction de la taille des pixels 21, 210 induit une réduction de la taille des transistors d'adaptation 23, 230 localisés dans lesdits pixels 21, 210. En conséquence, la largeur W et/ou la longueur L des grilles de ces transistors diminuent. Selon la relation {3}, cela induit une augmentation du niveau de bruit en 1/f du transistor d'adaptation.

La réduction de la taille du transistor d'adaptation 23, 203 présente aussi l'inconvénient d'introduire une dis-

person plus importante de leur tension de seuil qui va se répercuter par un bruit spatial plus important au niveau du dispositif de détection.

Le brevet référencé [3] décrit une architecture d'un dispositif de détection de rayonnement électromagnétique formé en une matrice de microbolomètres, dans lequel un transistor d'adaptation à injection directe est localisé en bout de colonne dans chaque colonne de la matrice, et est relié à tous les détecteurs élémentaires de ladite colonne par un bus de lecture. Cet arrangement permet de s'affranchir des contraintes géométriques imposées par la taille des pixels et permet donc en théorie de dessiner un transistor d'adaptation qui dispose d'une surface de grille plus large que si le transistor d'adaptation était localisé dans ou superposé audit pixel, ayant une surface limitée par celle du pixel.

Cependant, ledit transistor d'adaptation est commun à une colonne de détecteurs élémentaires de type microbolomètres ou bolomètres et donc il est introduit une résistance résiduelle entre le détecteur élémentaire et le transistor d'adaptation. La résistance résiduelle est en partie due au bus de lecture situé entre chaque microbolomètre et la source du transistor d'adaptation. Cette résistance série est inévitable car elle est liée à des dimensions du bus de lecture nécessairement réduites pour pouvoir intégrer le bus dans le pas du pixel.

Cette résistance série a pour effet de déplacer tout point de fonctionnement du microbolomètre et en réduit la sensibilité.

De surcroît, cette résistance série est différente pour chacun des détecteurs de la colonne, chaque détecteur élémentaire étant à une distance différente du transistor d'adaptation. Cette architecture introduit donc un gradient de points de fonctionnement et un gradient de sensibilité le long de la matrice. Cela induit un bruit spatial supplémentaire, le long des colonnes en plus de tout bruit spatial déjà présent. Il y a de plus formation d'un bruit colonnaire car chaque transistor d'adaptation est commun à une colonne et induit un bruit propre qui contribue à différentier les colonnes les unes des autres.

Enfin, l'augmentation possible des dimensions des transistors d'adaptation est limitée à une largeur de colonne de détecteurs élémentaires car certaines règles de dessin reliant la longueur et la largeur du transistor doivent être appliquées afin à limiter le bruit des transistors. Ainsi, une réduction des dimensions des détecteurs élémentaires ne peut pas forcément être compensée en termes de bruit et de rendement par cette solution.

Le brevet US 7679048 décrit un autre example d'architecture d'un dispositif formé en une matrice de microbolomètres.

## EXPOSÉ DE L'INVENTION

La présente invention a pour but de proposer un dispositif de détection de rayonnement électromagnétique qui intègre un dispositif d'adaptation d'impédance apte à restituer un rapport signal à bruit élevé pour plusieurs détecteurs élémentaires, notamment pour des détecteurs élémentaires intégrés, agencés en une matrice composée de lignes et de colonnes. La matrice est composée de pixels tel que définis plus haut, comprenant chacun plusieurs éléments dont un détecteur élémentaire. L'invention a pour but de remédier aux difficultés et limitations liées à un rapport signal à bruit dégradé et à une diminution de dimensions des pixels.

Un autre but de l'invention est de proposer un dispositif de détection de rayonnement électromagnétique qui minimise tout bruit spatial fixe trouvant son origine soit dans des dispersions de caractéristiques des éléments du pixel, soit dans des dispersions de caractéristiques d'éléments communs à une même colonne ou un même ensemble de pixels. Le dispositif selon l'invention a également l'avantage de permettre aux détecteurs élémentaires d'avoir un courant de lecture augmenté, pour obtenir une meilleure sensibilité, sans introduire de bruit significatif en provenance des dispositifs d'adaptation d'impédance qui sont reliés aux détecteurs élémentaires.

L'invention permet aussi de réaliser un dispositif de détection de rayonnement électromagnétique qui puisse faire appel à des technologies MOS avancées, induisant des dimensions de détecteur élémentaire et de liaisons électriques les plus petites possibles, sans être pénalisé par de faibles tensions d'alimentation tel qu'on le rencontre souvent dans ces technologies.

L'invention a enfin pour but de proposer un dispositif de détection de rayonnement électromagnétique qui présente des pixels simplifiés comprenant un nombre réduit d'éléments nécessaires à leur fonctionnement.

L'invention concerne donc un dispositif de détection de rayonnement électromagnétique comme divulgué dans la revendication 1.

De plus, pour la suite de la description, les détecteurs élémentaires sont définis comme étant reliés à une borne d'entrée du dispositif d'adaptation d'impédance et non comme pouvant être reliés en un point quelconque du dispositif d'adaptation d'impédance.

En mutualisant ainsi les dispositifs d'adaptation d'impédance entre plusieurs détecteurs élémentaires, il est possible d'avoir un dispositif d'adaptation d'impédance ayant une taille supérieure à celle qu'il aurait si on avait un dispositif d'adaptation d'impédance par détecteur élémentaire. Alors, tout bruit lié à la taille du dispositif d'adaptation d'impédance est réduit en comparaison.

De plus, une valeur de résistance sensiblement identique pour toutes les interconnexions dans un même sous-ensemble permet qu'une impédance résiduelle due à l'interconnexion soit sensiblement identique pour chaque pixel d'un même sous-ensemble.

S'il y a plusieurs sous-ensembles ayant un transistor d'adaptation dans le dispositif de détection, alors tous les pixels du dispositif de détection ont une impédance sensiblement identique.

Alors, chaque sous-ensemble de détecteurs élémentaires étant relié à un bus de lecture par l'intermédiaire du dispositif d'adaptation d'impédance, le bus de lecture est traversé par un courant de lecture qui comprend entre autre une composante fixe ayant une intensité fixe dépendant d'une impédance fixe sensiblement identique pour chaque détecteur élémentaire, prenant en compte la résistance de son interconnexion. Ledit courant de lecture circulant dans le bus de lecture comprend aussi une composante variable, dite signal délivré par un détecteur élémentaire, qui est une variation d'intensité dudit courant dépendant d'une variation de résistance du détecteur élémentaire. Cette variation de résistance est due à une interaction entre un détecteur élémentaire et un rayonnement électromagnétique incident sur le détecteur élémentaire. Comme l'impédance fixe est sensiblement identique pour tout détecteur élémentaire, il devient aisé d'identifier la part du courant de lecture due au rayonnement électromagnétique, indépendamment de la composante fixe du courant.

Les détecteurs élémentaires peuvent être des bolomètres ou des microbolomètres, des photodiodes ou des photoconducteurs. De préférence, les détecteurs élémentaires sont des microbolomètres. Il est ainsi possible d'utiliser des courants de lecture importants et de travailler à température ambiante.

Lorsque les détecteurs élémentaires sont des photodiodes, il peut être avantageux que le dispositif d'adaptation d'impédance soit relié à un circuit de capture et de mise en forme commun à tous les détecteurs élémentaires d'un unique sous-ensemble. Alors, le circuit de capture et de mise en forme peut être situé dans une position très proche des détecteurs élémentaires tout en conservant des dimensions adéquates à un fonctionnement correct. Une telle mutualisation par les détecteurs élémentaires permet de libérer une place suffisamment importante pour fabriquer le circuit de capture et de mise en forme au niveau des détecteurs élémentaires et ne nécessitent pas de le reléguer en bout de colonne ni de le mutualiser entre plusieurs sous-ensembles.

Inversement, que les détecteurs élémentaires soient du type microbolomètre ou photodiode, le dispositif d'adaptation d'impédance peut avantageusement être relié à un circuit de capture et de mise en forme commun à plusieurs sous-ensembles et situé par exemple en bout de colonne ou de ligne. Cela permet de mutualiser les circuits de capture et de mise en forme et de simplifier la fabrication de la matrice de détecteurs élémentaires. Cela laisse de plus une plus grande surface disponible pour fabriquer un dispositif d'adaptation d'impédance plus important que si le circuit de capture était relié à un unique sous-ensemble. Dans ce cas là, le bus de lecture relie avantageusement chaque dispositif d'adaptation d'impédance au circuit de capture et de mise en forme.

De préférence chaque détecteur élémentaire est en série avec un interrupteur qui lui est propre, les interrupteurs d'un même sous-ensemble prenant une position fermée de façon séquentielle de façon à ce qu'un bus de lecture relié au dispositif d'adaptation d'impédance reçoive un signal provenant d'un seul détecteur élémentaire à la fois. Ledit signal est modifié en courant par un passage dans le détecteur élémentaire en fonction du rayonnement électromagnétique auquel il est exposé. Il est alors possible de produire un multiplexage séquentiel entre les différents signaux provenant des différents détecteurs élémentaires.

Le dispositif d'adaptation d'impédance est de préférence un transistor à injection directe réglé en saturation, dit transistor d'adaptation. Les détecteurs élémentaires sont alors reliés à une électrode de source du transistor d'adaptation depuis une première borne présente sur le détecteur élémentaire. En effet, dans ce cas, la borne d'entrée du dispositif d'adaptation d'impédance est la source du transistor d'adaptation. Il est ainsi possible de simplifier le dispositif de détection de rayonnement électromagnétique, un seul transistor étant utilisé pour réaliser une fonction d'adaptation d'impédance. La sensibilité et la linéarité des détecteurs sont améliorées car on limite les variations de résistances perçues par le bus.

Avantageusement, les détecteurs élémentaires définissent un premier plan, différent d'un deuxième plan comprenant le dispositif d'adaptation d'impédance. Les deux plans sont superposés. Le dispositif d'adaptation d'impédance est de préférence en regard avec au moins une partie des détecteurs élémentaires. De plus, le dispositif d'adaptation d'impédance est de préférence en regard avec au moins une partie de chaque détecteur élémentaire. Dans le cas où le dispositif d'adaptation d'impédance est un transistor à injection directe, il est ainsi possible de fabriquer des transistors ayant une surface de grille plus importante que si le transistor d'adaptation était dans le même plan que le détecteur élémentaire.

Que la matrice de détecteurs élémentaires soit fabriquée dans un même substrat que le dispositif d'adaptation d'impédance ou sur un second substrat, il est possible de fabriquer les dispositifs d'adaptation d'impédance dans un plan différent du plan des détecteurs élémentaires. Ainsi, une augmentation de surface du dispositif d'adaptation d'impédance n'induit pas une diminution de surface des détecteurs élémentaires en retour. Cela permet d'obtenir des pixels de surface sensiblement égale à la surface d'un détecteur élémentaire.

De façon préférentielle, comme il y a plusieurs détecteurs élémentaires reliés à un même dispositif d'adaptation d'impédance, un dispositif d'adaptation d'impédance peut s'étendre en regard de plusieurs détecteurs élémentaires, voire avoir une surface supérieure à une surface principale d'un détecteur élémentaire. Avantageusement, le dispositif d'adaptation d'impédance étant un transistor d'adaptation, il peut avoir une surface de grille supérieure à une surface principale d'un détecteur élémentaire du sous-ensemble.

Enfin, il est possible de fabriquer des dispositifs d'adaptation d'impédance ayant une surface sensiblement égale à une surface cumulée des surfaces principales des détecteurs élémentaires d'un même sous-ensemble. Avantageusement, le dispositif d'adaptation d'impédance étant un transistor d'adaptation, il a une surface de grille supérieure à une surface correspondant à une somme des surfaces principales de plusieurs détecteurs élémentaires d'un même sous-ensemble.

Ces deux conditions avantageuses sont aussi valables dans le cas où, le transistor d'adaptation étant situé dans le deuxième plan, différent du premier plan contenant les détecteurs élémentaires, la surface principale d'un détecteur élémentaire représente la majorité de la surface d'un pixel.

Selon l'état de la technique, lorsqu'il y a un transistor d'adaptation par pixel, la surface de grille est inférieure à la surface du pixel. En effet, même si le transistor d'adaptation est situé dans le deuxième plan, différent du premier plan contenant les détecteurs élémentaires, le transistor d'adaptation a une source, un drain ainsi que des électrodes et interconnexions qui doivent aussi être dans le deuxième plan. La grille du transistor d'adaptation suivant l'état de la technique a donc généralement une surface inférieure à celle d'un pixel.

Avoir une surface de grille importante induit un faible bruit en 1/f dans le transistor d'adaptation et cela permet au transistor d'adaptation d'être traversé par un courant de lecture important en produisant un faible bruit intrinsèque. Il est donc possible, même dans des technologies de microélectronique induisant des faibles dimensions de pixel ou de détecteur élémentaire, d'obtenir des sous-ensembles de détecteurs élémentaires avec un faible bruit en 1/f, et un rendement d'injection important.

De façon à obtenir des valeurs de résistance des interconnexions, reliant chacune le dispositif d'adaptation d'impédance à un détecteur élémentaire, sensiblement égales, les interconnexions peuvent être de dimensions sensiblement identiques.

Dans le cas contraire, si les dimensions ne sont pas identiques, au moins une interconnexion voit avantageusement sa résistance accrue ou réduite, par rapport à la résistance qu'elle aurait si elle reliait le détecteur élémentaire à la borne d'entrée du dispositif d'adaptation d'impédance par un chemin le plus court possible en technologie microélectronique, au moins un détecteur élémentaire étant plus éloigné d'une borne d'entrée du dispositif d'adaptation d'impédance qu'un autre détecteur élémentaire du même sous-ensemble.

De cette manière, il est possible de former des interconnexions ayant des résistances sensiblement égales sans pour autant que des détecteurs élémentaires soient situés à une distance sensiblement égale d'une borne d'entrée du dispositif d'adaptation d'impédance, par exemple une électrode de source. Il est ainsi possible de fabriquer un dispositif d'adaptation d'impédance optimal sans tenir compte d'un possible agencement de ses détecteurs élémentaires. Ceci peut être plus simple que de configurer le dispositif d'adaptation d'impédance en une forme compliquée pour qu'une borne d'entrée, par exemple l'électrode de source, ait une partie à une distance sensiblement égale de chaque détecteur élémentaire.

En technologie microélectronique, le chemin le plus court possible entre deux points est différent du chemin géométriquement le plus court possible. En effet, en microélectronique, il est nécessaire de contourner au moins tout élément présent entre les deux points précités. Il est de plus nécessaire de les contourner sans entrer en contact avec d'autres éléments. De plus, en microélectronique, il est appliqué des règles de dessins visant à éviter que les différents éléments présents autour d'un endroit donné soient trop proches les uns des autres. Il est nécessaire de laisser une distance de sécurité entre les différents éléments de façon à éviter un court-circuit ou des courants de fuite. Enfin, en microélectronique, s'il est possible d'effectuer des liaisons hors d'un plan parallèle au premier plan défini par les détecteurs élémentaires, ces liaisons sont faites de puits verticaux et de liaisons comprises dans des plans parallèles au premier plan ; il n'est généralement pas possible d'effectuer des liaisons ayant un angle sensiblement différent de 0 ° ou 90 ° par rapport à une normale au premier plan.

Si un détecteur élémentaire est plus éloigné du dispositif d'adaptation d'impédance qu'un autre détecteur élémentaire du même sous-ensemble, il est avantageux qu'au moins une interconnexion de longueur donnée, reliant le dispositif d'adaptation d'impédance à un détecteur élémentaire, ait, sur au moins une partie de sa longueur, une section différente de la section d'au moins une partie d'une autre interconnexion reliant le dispositif d'adaptation d'impédance à un autre détecteur élémentaire du même sous-ensemble. Dans la partie de section différente de la section d'une autre interconnexion, l'interconnexion a une résistance par unité de longueur différente de celle de l'autre interconnexion. Ainsi, il est possible d'accroître ou de réduire artificiellement la résistance de l'interconnexion. Il est donc possible de relier à un dispositif d'adaptation d'impédance des détecteurs élémentaires situés à des distances différentes de la borne d'entrée du dispositif d'adaptation d'impédance au moyen d'interconnexions ayant des longueurs différentes mais des résistances sensiblement égales.

Dans cette situation, s'il est nécessaire d'accroître la résistance d'une interconnexion reliant le dispositif d'adaptation d'impédance à un détecteur élémentaire, l'interconnexion, ayant une résistance accrue et une longueur donnée, comporte de façon avantageuse un rétrécissement de section sur au moins une partie de sa longueur.

Un tel rétrécissement partiel de section peut permettre de modifier la résistance d'une interconnexion qui le nécessite sans pour autant allonger cette interconnexion. En effet, s'il est possible d'allonger une interconnexion, par rapport au chemin le plus court possible, de façon à accroître sa résistance, cela induit une formation de longueurs supplémentaires d'interconnexion. Il devient alors plus difficile de calculer et dessiner le chemin le plus court possible pour des interconnexions voisines.

Selon l'invention, les détecteurs élémentaires sont agencés en une matrice comportant des lignes et des colonnes de détecteurs élémentaires. Alors le sous-ensemble peut comporter différents détecteurs élémentaires situés sur plusieurs lignes et différents détecteurs élémentaires situés sur plusieurs colonnes de la matrice.

Ceci permet de diminuer à la fois une composante colonnaire et une composante linéaire d'un bruit spatial de la matrice. En effet, cette situation implique de façon avantageuse qu'un premier sous-ensemble soit relié à un bus de lecture différent du bus de lecture relié à au moins un deuxième sous-ensemble ayant un détecteur élémentaire dans une même ligne de la matrice qu'un détecteur élémentaire du premier sous-ensemble. Et de plus, le premier sous-ensemble est généralement relié à un bus de lecture différent du bus de lecture relié à au moins un troisième sous-ensemble ayant un détecteur élémentaire dans une même colonne de la matrice qu'un détecteur élémentaire du premier sous-ensemble.

En particulier, si le circuit de capture et de mise en forme est commun à plusieurs sous-ensembles, tout bruit dû au dit circuit de capture et de mise en forme ne crée pas de bruit colonnaire, le circuit de capture et de mise en forme étant relié à des détecteurs élémentaires présents dans différentes lignes et colonnes de la matrice, et n'étant pas relié à tous les détecteur élémentaires d'une même ligne ni à tous les détecteurs élémentaires d'une même colonne.

De façon alternative, le sous-ensemble peut comporter différents détecteurs élémentaires situés sur plusieurs lignes et sur une seule colonne ou différents détecteurs élémentaires situés sur plusieurs colonnes et sur une seule ligne de la matrice. Dans ce cas, le sous-ensemble représente une fraction d'une ligne ou d'une colonne de la matrice. Dans cette situation, le bruit spatial linéaire ou colonnaire n'est diminué que dans le sens où le bus de lecture achemine un signal provenant de différents sous-ensembles et non d'un seul dispositif sous-ensembles.

Il est possible de façon avantageuse, dans tous les cas, de diminuer le bruit spatial colonnaire si des sous-ensembles ayant des détecteurs élémentaires situés sur une même ligne ou colonne de la matrice sont reliés à des bus de lecture différents.

Dans un mode intéressant de l'invention, les détecteurs élémentaires d'un même sous-ensemble sont agencés selon une symétrie axiale d'ordre donné. Cela permet de faciliter la formation des interconnexions et la formation de la borne d'entrée du dispositif d'adaptation d'impédance. C'est en particulier utile si l'on désire que les interconnexions d'un même sous-ensemble aient des dimensions sensiblement identiques. C'est aussi utile si l'on désire que pour chaque détecteur élémentaire il y a ait au moins un point de la borne d'entrée, par exemple un point d'une électrode de source, qui soit situé à une distance donnée, sensiblement identique pour chaque détecteur élémentaire.

## BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :

la figure 1 (déjà décrite) illustre un exemple de schéma électrique connu d'un pixel comportant un détecteur élémentaire infrarouge, ici une photodiode, et un transistor d'adaptation dans un montage en injection directe ;

la figure 2 (déjà décrite) illustre un schéma électrique partiel d'un dispositif de détection de rayonnement électromagnétique utilisant un mode de lecture des détecteurs élémentaires de type microbolomètre par montage en injection directe, d'un type connu, dans lequel un transistor d'adaptation de type PMOS monté en grille commune est associé à chaque détecteur ;

la figure 3 illustre un schéma électrique partiel d'un dispositif de détection de rayonnement électromagnétique selon un premier mode de réalisation de l'invention ;

la figure 4 est une vue schématique du dispositif de détection de rayonnement électromagnétique conforme au premier mode de réalisation de l'invention ;

la figure 5 est une vue schématique d'un dispositif de détection de rayonnement électromagnétique selon un deuxième mode de réalisation de l'invention ;

les figures 6A et 6B sont des vues simplifiées partielles en plan d'un dispositif de détection de rayonnement électromagnétique selon un autre mode de réalisation de l'invention comprenant seize détecteurs élémentaires dans un sous-ensemble ;

la figure 7 est une vue schématique d'un dispositif de détection de rayonnement électromagnétique selon l'invention dans lequel certaines des interconnexions ont des résistances accrues par rétrécissement partiel de largeur ;

la figure 8 illustre un schéma d'un dispositif de détection de rayonnement électromagnétique selon l'invention dont un sous-ensemble regroupe tous les détecteurs élémentaires d'une colonne de détecteurs élémentaires,
la figure 9 illustre une vue en coupe d'un dispositif de détection de rayonnement électromagnétique selon l'invention comportant deux détecteurs élémentaires dans un sous-ensemble, reliés à un même transistor d'adaptation.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les figures illustratives des différents modes de réalisation du dispositif selon l'invention sont données à titre d'exemple et ne sont pas limitatives.

## EXPOSÉ DÉTAILLÉ DE MODES DE RÉALISATION PARTICULIERS

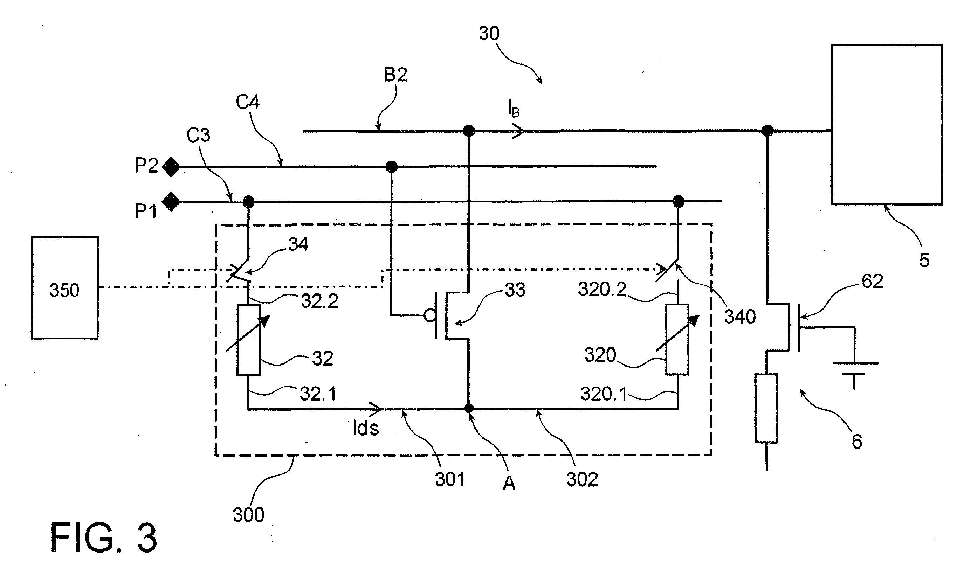

La description de l'invention sera mieux comprise à la lumière de la figure 3 illustrant un mode particulier de réalisation de l'invention.

La figure 3 représente un schéma électrique simplifié d'un dispositif de détection de rayonnement électromagnétique 30 comportant une pluralité de détecteurs élémentaires de rayonnement électromagnétique 32, 320 agencés préférentiellement en matrice avec au moins une ligne et/ou au moins une colonne. Les détecteurs élémentaires 32, 320 sont regroupés en un ou plusieurs sous-ensembles 300 comportant chacun plusieurs détecteurs élémentaires et un seul sous-ensemble 300 est représenté en figure 3.

Dans la suite de la description, selon la définition présentée au dessus, un pixel désignera un ensemble formé d'un détecteur élémentaire, un interrupteur et de différentes liaisons électriques qui sont propres à ce détecteur élémentaire et à cet interrupteur.

De plus, il sera considéré que les détecteurs élémentaires sont arrangés les uns avec les autres avec un pas donné selon les colonnes et un autre pas donné selon les lignes, cet autre pas étant différent ou identique au pas des colonnes. Une surface définie par le pas selon une colonne et le pas selon une ligne de la matrice est dite surface d'un pixel.

Enfin, il sera considéré que les détecteurs élémentaires sont reliés à une borne d'entrée d'un dispositif d'adaptation d'impédance et non en un point quelconque de celui-ci. De plus, si le dispositif d'adaptation d'impédance est un transistor d'adaptation, ayant une source et un drain, la source est considérée comme étant la borne d'entrée.

Chaque sous-ensemble 300 de détecteurs élémentaires comprend donc plusieurs détecteurs élémentaires 32, 320, ici, il en comprend deux agencés en une ligne.

Outre les détecteurs élémentaires 32, 320, chaque sous-ensemble 300 comporte un unique dispositif d'adaptation d'impédance 33, préférentiellement un transistor MOS 33 monté en grille commune, dit transistor d'adaptation 33.

Néanmoins, le dispositif d'adaptation d'impédance peut également être tout type de transistor présentant une faible résistance d'entrée, par exemple, un transistor bipolaire monté en base commune (plus connu sous son acronyme J.E.T.), ou être un amplificateur opérationnel en montage trans-impédance, ledit amplificateur opérationnel présentant une faible impédance d'entrée, ou être tout autre type d'adaptation d'impédance connu par l'homme de métier qui est compatible avec les contraintes technologiques liées à l'invention.

Le transistor d'adaptation 33 est monté en injection directe et est apte à réaliser une adaptation d'impédance entre les détecteurs élémentaires 32, 320 et un circuit de capture et de mise en forme 5 de signaux délivrés par les détecteurs élémentaires 32, 320, ce circuit de capture et de mise en forme 5 peut éventuellement être commun à plusieurs sous-ensembles 300. Les détecteurs élémentaires 32, 320, sont de préférence des microbolomètres, fonctionnant à température ambiante, et sensibles à un rayonnement électromagnétique, par exemple un rayonnement infrarouge. En variante, il pourrait s'agir de photodiodes ou de photoconducteurs.

De façon alternative, dans un autre mode de réalisation de l'invention, en particulier dans le cas de détecteurs élémentaires 32, 320 de type photodiode permettant une détection de rayonnements électromagnétiques du spectre visible, le circuit de capture et de mise en forme 5 est intégré avec le dispositif d'adaptation d'impédance 33, commun à un unique sous-ensemble 300. Le bus de lecture B1 connecte alors plusieurs circuits de capture et de mise en forme 5 à un unique circuit permettant une analyse des signaux et la formation d'un signal vidéo.

Dans le mode de réalisation illustré en figure 3, les détecteurs élémentaires 32, 320 consistent en des microbolomètres et chaque sous-ensemble 300 est défini en ayant un dispositif d'adaptation d'impédance 33 commun à tous les détecteurs élémentaires 32, 320 du sous-ensemble. De plus, le circuit de capture et de mise en forme 5 est commun à plusieurs sous-ensembles 300.

Chaque sous-ensemble 300 comporte, en outre, des interrupteurs 34, 340, chacun associé à un détecteur élémentaire 32, 320. Les interrupteurs 34, 340 sont par exemple des transistors utilisés en régime de commutation.

Le transistor d'adaptation 33 de chaque sous-ensemble 300 peut être un MOS de type P, comme représenté sur la figure 3, ou de type N, ou un transistor de type bipolaire. Dans ces deux derniers cas, des tensions de polarisation appliquées au dispositif de détection de rayonnement électromagnétique seront adaptées en conséquence. Le transistor d'adaptation 33, ainsi que tous les transistors d'adaptation présentés dans la suite, sont considérés comme ayant une grille et ayant une source et un drain en contact électrique avec respectivement une électrode de source et une électrode de drain. La grille a une longueur L et une largeur W dont le produit définit une surface de grille.

Chaque détecteur élémentaire 32, 320 est relié par une première borne 32.1, 320.1 à l'électrode de source du transistor d'adaptation 33 du sous-ensemble 300 concerné, au moyen d'une interconnexion 301, 302. Les premières bornes 32.1, 320.1 des détecteurs élémentaires 32, 320 d'un même sous-ensemble 300 sont reliées entre elles ainsi qu'à l'électrode de source d'un même transistor d'adaptation 33 en un noeud commun A. Selon l'invention, les interconnexions 301, 302 reliant chaque détecteur élémentaire d'un sous-ensemble avec le transistor d'adaptation 33, unique, présentent sensiblement une même valeur de résistance électrique. On sait que la résistance d'une interconnexion est proportionnelle à une résistivité du matériau qui la constitue et à une longueur d'interconnexion et est inversement proportionnelle à une section transversale de l'interconnexion.

Chaque détecteur élémentaire 32, 320 du sous-ensemble 300 de détecteurs élémentaires est relié par une deuxième borne 32.2, 320.2 à un des interrupteurs 34, 340, ce qui permet de le connecter à une première source de tension P1 ou de l'isoler de la première source de tension P1. La première source de tension P1 peut être interne ou externe au dispositif de détection de rayonnement électromagnétique 30 et permet de délivrer un courant de lecture nécessaire pour lire une variation de résistance des détecteurs élémentaires 32, 320 sous l'influence d'un rayonnement électromagnétique, correspondant au signal délivré par le détecteur élémentaire 32, 320. La première source de tension P1 est reliée à chaque interrupteur 34, 340 par l'intermédiaire d'une connexion électrique C3. De façon alternative, l'interrupteur 34, 340 peut être situé sur l'interconnexion reliant le détecteur élémentaire 32, 320 au dispositif d'adaptation d'impédance 33.

L'électrode de drain du transistor 33 est connectée à un bus de lecture B2, relié au circuit de capture et de mise en forme 5 et de préférence à un circuit d'ébasage 6.

La grille du transistor d'adaptation 33 est reliée par l'intermédiaire d'une connexion C4 à une deuxième source de tension P2, interne ou externe au dispositif de détection de rayonnement électromagnétique. La deuxième source de tension P2 est réglée de façon à garantir un fonctionnement du transistor d'adaptation 33 en saturation.

Les circuits de capture et de mise en forme 5 et d'ébasage 6 relèvent de l'état de la technique. Les exemples de circuits représentés dans cette figure sont utilisés à titre d'illustration et ne limitent pas l'invention. Ces circuits correspondent à ceux décrits à la figure 2, c'est pourquoi, on ne les décrit pas une nouvelle fois. D'autres types de circuits de capture et de mise en forme 5 et d'ébasage 6 peuvent être facilement utilisés sans se démarquer pour autant du cadre de l'invention.

Selon le montage de la figure 3, dans la situation où respectivement un des deux interrupteurs 34 ou 340 est fermé, il s'établit un courant électrique de lecture Ids entre la première source de tension P1 et le bus de lecture B2, à travers d'une part le détecteur élémentaire 32 ou 320 qui est ainsi connecté et d'autre part l'unique transistor d'adaptation 33 du sous-ensemble 300.

Des moyens de commande 350 qui relèvent de l'art connu, par exemple comprenant un registre à décalage, sont prévus pour fermer successivement dans un ordre séquentiel les différents interrupteurs 34, 340 présents dans un même sous-ensemble 300 de manière qu'à un instant donné au plus un seul interrupteur 34, 340 d'un même sous-ensemble soit fermé. Cela permet de faire circuler sur le bus de lecture B2 un courant de valeur égale au courant de lecture Ids et portant un signal représentatif d'un multiplexage temporel des signaux délivrés par les différents détecteurs élémentaires 32, 320 du sous-ensemble 300.

Dans le sous-ensemble 300 un seul transistor d'adaptation 33 permet de coupler deux détecteurs élémentaires 32, 320 différents. Il s'ensuit que pour un pas entre les deux détecteurs élémentaires 32, 320 donné, le transistor d'adaptation 33 peut avoir une taille qui peut être augmentée d'un facteur deux par rapport à la situation, traditionnelle dans l'état de la technique, comportant un transistor d'adaptation par détecteur élémentaire. Cela permet d'améliorer le rapport signal à bruit du dispositif de détection selon l'invention.

Plus particulièrement, les détecteurs élémentaires 32, 320, définissant un premier plan, peuvent être présents dans un plan différent du dispositif d'adaptation d'impédance 33 et du circuit de capture et de mise en forme 5, définissant un deuxième plan. Les deux plans sont avantageusement superposés. Les détecteurs élémentaires 32, 320 peuvent être alors proches les uns des autres sans toutefois être jointifs. Alors, chaque détecteur élémentaire 32, 320 ayant une surface principale donnée, il sera considéré que la surface d'un pixel est sensiblement égale à la surface principale d'un détecteur élémentaire 32, 320.

S'il est dans un deuxième plan vis-à-vis des détecteurs élémentaires 32, 320, le dispositif d'adaptation d'impédance 33 peut avantageusement s'étendre en regard des détecteurs élémentaires 32, 320 du sous-ensemble 300. Ainsi, il est possible de fabriquer un transistor d'adaptation 33 ayant une surface sensiblement égale à une surface cumulée de tous les pixels du sous-ensemble 300. Alors le transistor d'adaptation 33 peut avoir une surface de grille supérieure à au moins la surface d'un pixel ou la surface principale d'un détecteur élémentaire. Il est aussi possible de fabriquer le transistor d'adaptation 33 tel que la surface de grille soit sensiblement égale à une somme des surfaces principales de plusieurs des détecteurs élémentaires 32, 320 du sous-ensemble 300, voire de tous. On comprend que le transistor d'adaptation 33 peut avoir, dans l'exemple de la figure 3, une grille de surface importante, par exemple plus grande que la surface d'un détecteur élémentaires 32, 320 ou approchant la surface cumulée des détecteurs élémentaires du sous-ensemble, ici deux détecteurs élémentaires.

Le schéma électrique de la figure 3 présente une symétrie axiale d'ordre deux dont on peut tirer profit pour réaliser un dispositif de détection de rayonnement électromagnétique où les deux interconnexions 301, 302 qui relient les premières bornes 32.1, 320.1 des détecteurs élémentaires 32, 230 à l'électrode de source du transistor 33 sont de longueurs et de sections sensiblement identiques. Ces interconnexions 301, 302 ont alors des résistances électriques sensiblement égales dans la mesure où elles sont réalisées dans un même matériau. Si elles ne sont pas strictement égales, leurs résistances sont au moins comparables. Cette configuration des interconnexions 301, 302 permet d'optimiser la réalisation du noeud commun A pour réduire notablement le bruit spatial du dispositif de détection de rayonnement électromagnétique.

On verra ultérieurement que les interconnexions peuvent avoir des géométries différentes, tout en respectant des valeurs de résistance électrique sensiblement égales.

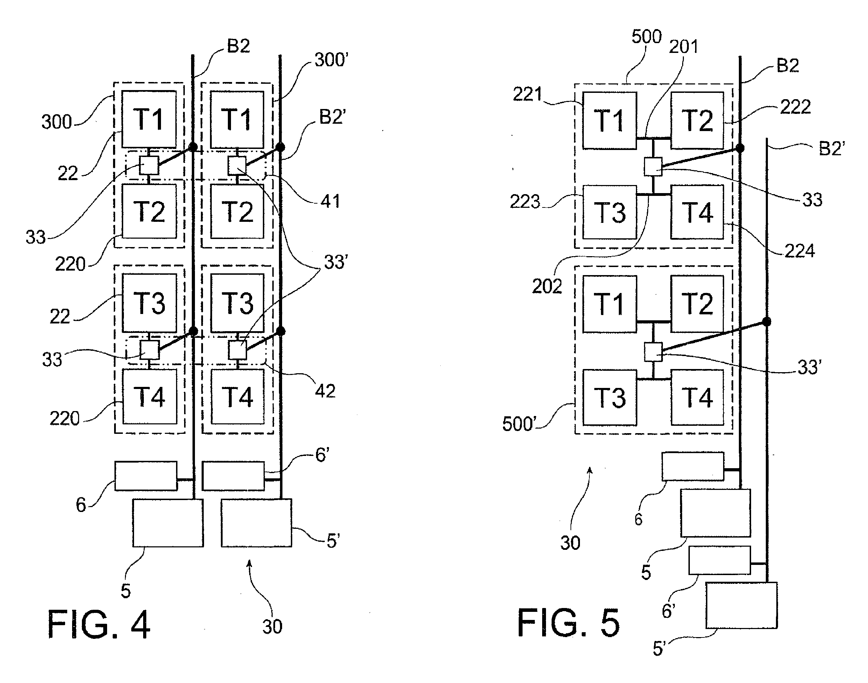

L'invention sera mieux comprise en conjonction avec les figures 4 et 5 qui illustrent une vue schématique partielle en plan d'un premier mode de réalisation et d'un second mode de réalisation du dispositif de détection de rayonnement électromagnétique selon l'invention.

Les figures 4 et 5 sont des schémas fonctionnels de modes de réalisation de l'invention. Les différents éléments du schéma représentent des fonctions et un arrangement des différentes fonctions. Les schémas fonctionnels ne cherchent pas à donner des informations sur les tailles respectives des différents éléments du dispositif de détection de rayonnement électromagnétique, ou à affirmer ou infirmer des superpositions d'éléments. Certains éléments peuvent être omis de façon à simplifier une lecture du schéma. La portée de l'invention n'est pas limitée par les schémas fonctionnels de ces figures.

La figure 4 représente de manière schématique un dispositif de détection de rayonnement électromagnétique 30 selon l'invention comprenant une pluralité de détecteurs élémentaires 22, 220 regroupés en plusieurs sous-ensembles 300, 300' de détecteurs élémentaires 22, 220 agencés en matrice à au moins une ligne et une colonne. Les sous-ensembles sont représentés en pointillés. Les différents détecteurs élémentaires sont intégrés sur un substrat non représenté. Dans ce mode de réalisation, il est représenté une portion de deux colonnes de la matrice. Chaque colonne contenant au moins deux sous-ensembles 300, 300' de deux détecteurs élémentaires, les détecteurs élémentaires 22, 220 d'un sous-ensemble 300, 300' font partie d'une même colonne de la matrice. Chaque colonne de détecteurs élémentaires est reliée à un bus de lecture B2, B2' apte à transmettre un signal provenant des détecteurs élémentaires 22, 220 des sous-ensembles 300, 300' de la colonne vers un circuit de capture et de mise en forme 5, 5' du signal délivré par les détecteurs élémentaires concernés. Un circuit d'ébasage 6, 6' est aussi relié à chaque bus de lecture B2, B2'. Les détecteurs élémentaires 22, 220 sont disposés les uns par rapport aux autres avec un pas donné dans une même ligne et un autre pas, identique ou différent du précédent, dans une même colonne de la matrice.

Chaque sous-ensemble 300, 300' comprend des détecteurs élémentaires et d'autres éléments de circuit électrique, les détecteurs élémentaires et les autres éléments de circuit électrique sont de préférence intégrés dans deux plans distincts superposés, selon une architecture monolithique ou hybride comme déjà décrit plus haut.

Les éléments de circuit électrique comprennent un unique dispositif d'adaptation d'impédance, prenant ici la forme d'un transistor d'adaptation 33, 33', commun aux détecteurs élémentaires d'un même sous-ensemble 300, 300', un interrupteur, non représenté, par détecteur élémentaire 22, 220 et des interconnexions entre les détecteurs élémentaires 22, 220 et le transistor d'adaptation 33, 33', comme décrit précédemment dans la figure 3.

Chaque détecteur élémentaire 22, 220 est relié par sa première borne au transistor d'adaptation 33, 33' qui le connecte au bus de lecture B2, B2'. Pour simplifier la figure, tous les éléments de circuit ne sont pas représentés, en particulier les interrupteurs n'y figurent pas.

Pour effectuer une capture des signaux délivrés par chacun des détecteurs élémentaires du dispositif de détection de rayonnement électromagnétique, il est réalisé une lecture séquentielle par colonne des différents détecteurs élémentaires à des instants qui sont chronologiquement repérés sur la figure 4 par les symboles T1, T2, T3 et T4.

A l'instant T1, les détecteurs élémentaires 22 de la première ligne, dans toutes les colonnes, sont simultanément lus, un interrupteur (non représenté) les reliant à une première source de tension (non représentée) et permettant à un courant de lecture de circuler dans ces détecteurs élémentaires 22. Les détecteurs élémentaires 22 lus sont reliés, par l'intermédiaire des transistors d'adaptation 33, 33' de leur sous-ensemble présents dans une première rangée 41 de transistors d'adaptation 33, 33', aux différents circuits de capture et de mise en forme 5, 5' localisés au pied de chacune des colonnes.

A l'instant T2, on procède à la lecture d'une deuxième ligne de détecteurs élémentaires 220, correspondant aux deuxièmes détecteurs élémentaires des sous-ensembles précédemment mesurés, toujours par l'intermédiaire de la première rangée 41 de transistors d'adaptation 33, 33'.

A l'instant T3, c'est une troisième ligne de détecteurs élémentaires 22 qui est lue mais par l'intermédiaire d'une deuxième rangée 42 de transistors 33, 33', chacun appartenant à d'autres sous-ensembles 300, 300' que ceux dont les détecteurs élémentaires ont été lus précédemment. Cette deuxième rangée 42 de transistors d'adaptation 33, 33' sera aussi utilisée à l'instant T4 pour une lecture d'une quatrième ligne de détecteurs élémentaires.

Cette lecture enchaînée, dite multiplexage, des différentes lignes de détecteurs élémentaires est rendue possible par une commande adéquate des interrupteurs qui relient les détecteurs élémentaires 22, 220 à la première source de tension délivrant le courant de lecture nécessaire pour lire les détecteurs élémentaires. Ce processus peut bien entendu être prévu pour un nombre quelconque de lignes et pour un nombre quelconque de colonnes.

Selon ce mode de réalisation, un même transistor d'adaptation 33, 33' est utilisé à deux instants différents pour récupérer un signal délivré provenant de deux détecteurs élémentaires 22, 220 distincts puisqu'un transistor d'adaptation est commun à deux détecteurs élémentaires du même sous-ensemble. Géométriquement, ce transistor d'adaptation 33 s'inscrit dans l'emprise des deux détecteurs élémentaires 22, 220 adjacents d'un même sous-ensemble 300 et la surface de la grille du transistor d'adaptation 33 peut donc être agrandie en proportion par rapport au cas où il y avait autant de transistors d'adaptation que de détecteurs élémentaires, comme décrit plus haut en relation avec la figure 2.

L'électrode de source du transistor d'adaptation dans un sous-ensemble peut avantageusement être située à égale distance des premières bornes des deux détecteurs élémentaires 22, 220. Cette localisation peut être exploitée pour réaliser au sein de chaque sous-ensemble 300, 300', un montage où les deux interconnexions qui relient les détecteurs élémentaires 300, 300' à l'électrode de source du transistor d'adaptation 33, 33' sont idéalement identiques en ce qui concerne leur géométrie définie par leur longueur et leur section transversale, c'est-à-dire le produit de leur largeur par leur épaisseur et au moins comparables en ce qui concerne leur résistance.

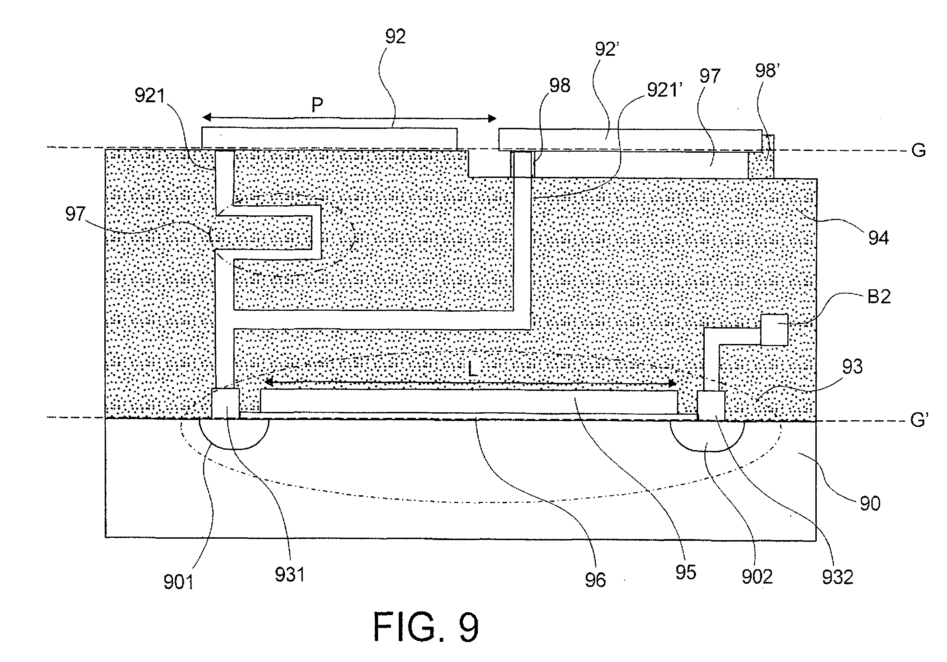

Avantageusement, le transistor d'adaptation 33, 33' est situé dans un deuxième plan différent d'un premier plan défini par les détecteurs élémentaires 22, 220 comme illustré plus loin en figure 9. Les deux plans sont avantageusement superposés. Ainsi, tel qu'expliqué en relation avec la figure 3, la surface d'un pixel peut être proche de la surface principale d'un détecteur élémentaire 22, 220 et il est possible d'obtenir des transistors d'adaptation dont la surface de grille peut atteindre une valeur proche d'une somme des surfaces principales des deux détecteurs élémentaires 22, 220 du sous-ensemble.

Si les transistors d'adaptation 33, 33' sont dans un même plan que les détecteurs élémentaires 22, 220 il est là aussi possible d'avoir des transistors d'adaptation 33, 33' deux fois plus grand que dans le cas où le transistor d'adaptation 33, 33' n'est relié qu'à un seul détecteur élémentaire.

Il est possible, dans différents modes de réalisation de l'invention, si les détecteurs élémentaires dans chaque sous-ensemble 300, 300' appartiennent à plusieurs colonnes de la matrice, d'avoir un même bus de lecture relié à des détecteurs élémentaires appartenant à plusieurs colonnes de la matrice, ou plusieurs bus de lecture pour des détecteurs élémentaires appartenant à la même colonne de la matrice et/ou le multiplexage peut avoir lieu à l'intérieur d'une même ligne de détecteurs élémentaires.

La figure 5 est une vue schématique partielle en plan d'un deuxième mode de réalisation du dispositif de détection de rayonnement électromagnétique, conforme à l'invention et illustrant la possibilité exposée ci-dessus.

Les différents détecteurs élémentaires du dispositif de détection de rayonnement électromagnétique 30 sont dans ce cas regroupés en sous-ensembles 500, 500' comprenant chacun quatre détecteurs élémentaires 221, 222, 223, 224, agencés en deux lignes de deux détecteurs élémentaires. Dans chacun des sous-ensembles 500, 500', les détecteurs élémentaires 221, 222, 223, 224, sont chacun reliés au moyen d'interconnexions 201, 202 à un unique dispositif d'adaptation d'impédance prenant la forme d'un transistor d'adaptation 33, 33'. Les interconnexions 201, 202, sont ici représentées en forme de T et relient deux détecteurs élémentaires 221, 222 ou 223, 224 ensemble et avec le transistor d'adaptation 33, 33'. Le transistor d'adaptation 33, 33' est connecté, par l'intermédiaire d'un bus de lecture B2, B2' à un circuit de capture et de mise en forme 5, 5' du signal délivré par chacun des détecteurs élémentaires et à un circuit d'ébasage 6, 6'. Les transistors d'adaptation 33, 33' sont montés en injection directe et sont aptes à fournir une adaptation d'impédance entre les détecteurs élémentaires 221, 222, 223, 224 des sous-ensembles 500, 500' et le circuit de capture et de mise en forme 5, 5'.

Ici, les deux sous-ensembles 500, 500' représentés forment une rangée de sous-ensembles. De plus, chaque sous-ensemble comporte des détecteurs élémentaires appartenant à deux colonnes de la matrice. Les sous-ensembles sont connectés de façon alternée, dans une même rangée de sous-ensembles, à un bus de lecture parmi deux bus de lecture B2, B2' et à un circuit de capture et de mise en forme 5, 5' parmi deux circuits de capture et de mise en forme 5, 5'. Ainsi, chaque bus de lecture B2, B2' reçoit un signal délivré par des détecteurs élémentaires situés dans deux colonnes de la matrice et aucun des deux bus de lecture B2, B2' représentés n'est relié à l'ensemble des détecteurs élémentaires d'une des colonnes de la matrice. Cette configuration permet de disposer en moyenne d'un bus de lecture B2, B2' pour un nombre de détecteurs comparable à un nombre de détecteurs élémentaires compris dans une seule colonne.

Avantageusement chacun des circuits de capture et de mise en forme 5, 5' et chacun des bus de lecture B2, B2' sont communs à plusieurs sous-ensembles 500, 500', même si seulement deux sous-ensembles 500, 500' sont représentés.

Lesdits sous-ensembles 500, 500' étant arrangés sous la forme de rangées, cela permet une lecture séquentielle des détecteurs élémentaires 221, 222, 223, 224 dans un ordre chronologique repéré par les symboles T1, T2, T3 et T4 sur la figure 5.

A l'instant T1, les détecteurs élémentaires 221 des deux sous-ensembles représentés sont reliés simultanément à un circuit de capture et de mise en forme 5, 5' par l'intermédiaire du transistor d'adaptation 33, 33' associé au sous-ensemble concerné. Chacun des deux bus de lecture B2, B2' reçoit donc un signal délivré par un détecteur élémentaire situé dans la même position relativement à chaque sous-ensemble.

Aux instants T2, puis T3, puis T4, un seul détecteur élémentaire 222, 223, 224 de chaque sous-ensemble 500, 500', et jamais le même, est successivement connecté au circuit de capture et de mise en forme 5, 5'. A chacun de ces instants T1, T2, T3, T4, aucun courant de lecture ne circule entre les autres détecteurs élémentaires 221, 222, 223, 224 et le transistor d'adaptation 33, 33'.

Il est bien entendu que s'il y a plusieurs sous-ensembles 500, 500' reliés à un bus de lecture B2, B2', la lecture séquentielle devra prendre en compte les détecteurs élémentaires qu'ils contiennent de façon à ce qu'à un instant T donné, seul le signal délivré par un unique détecteur élémentaire circule dans le bus de lecture B2.

Il convient ici de noter que d'autres séquences temporelles sont possibles sans pour autant sortir du cadre de l'invention.

En particulier, les différents sous-ensembles 500, 500' agencés en une même rangée de sous-ensembles peuvent être reliés à un même bus de lecture B2, B2', permettant une économie de bus de lectures B2, B2' à l'échelle de la matrice en échange d'un temps de multiplexage plus long que dans le premier mode de réalisation, tous les détecteurs élémentaires situés dans deux colonnes de la matrice devant être multiplexés sur un même bus de lecture.

Selon ce deuxième mode de réalisation, un même transistor d'adaptation 33, 33' est utilisé à quatre instants différents T1, T2, T3, T4, pour la lecture de quatre détecteurs élémentaires 221, 222, 223, 224 distincts d'un même sous-ensemble 500, 500'. Ce transistor d'adaptation 33, 33' s'inscrit géométriquement dans l'emprise des quatre détecteurs élémentaires du sous-ensemble. Ainsi, la surface de grille du transistor d'adaptation peut être ajustée en proportion de la manière mentionnée en relation avec les figures 3 et 4. Comme il est relié à un sous-ensemble comportant d'autres détecteurs élémentaires répartis en deux lignes et deux colonnes, le positionnement de l'électrode de source du transistor d'adaptation bénéficie avantageusement d'une symétrie axiale d'ordre 4. L'électrode de source peut par exemple être prévue pour se situer sensiblement à égale distance des premières bornes de chacun des quatre détecteurs élémentaires. Elle peut, par exemple, prendre la forme d'un U ayant toujours au moins un point à une distance fixée de la première borne de chaque détecteur élémentaire. Cette mesure permet d'obtenir des caractéristiques de couplage sensiblement identiques pour tous les détecteurs élémentaires du sous-ensemble et donc pour tous les détecteurs élémentaires de la matrice. Notamment les interconnexions 201, 202 ont une valeur de résistance sensiblement égale et induisent ainsi d'une faible résistance parasite et forment une faible composante de bruit spatial.

D'autres modes de réalisation qui tirent partie de symétries d'agencement des détecteurs élémentaires selon les modes de réalisation de l'invention peuvent être prévus pour dessiner les transistors d'adaptation selon l'invention.

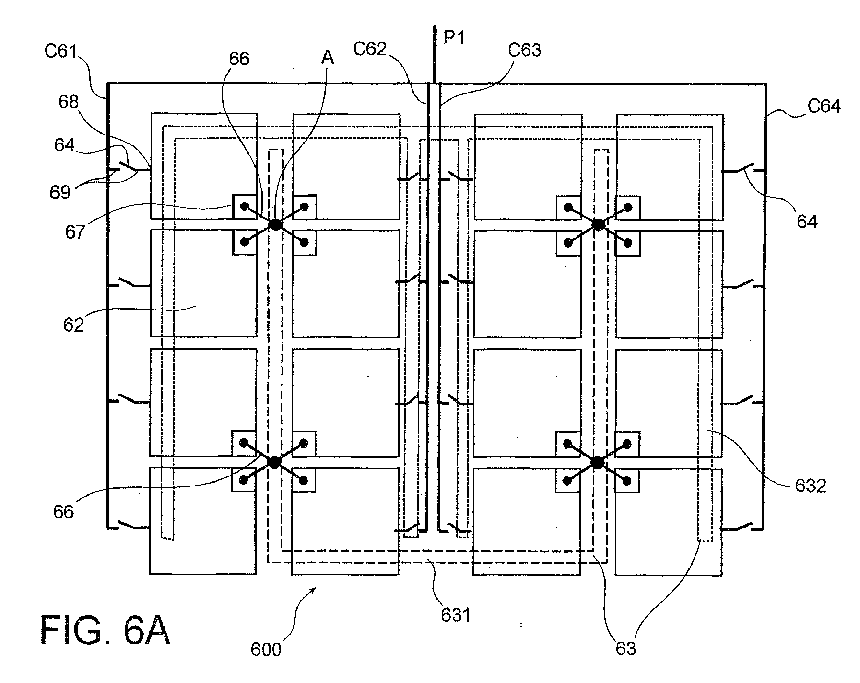

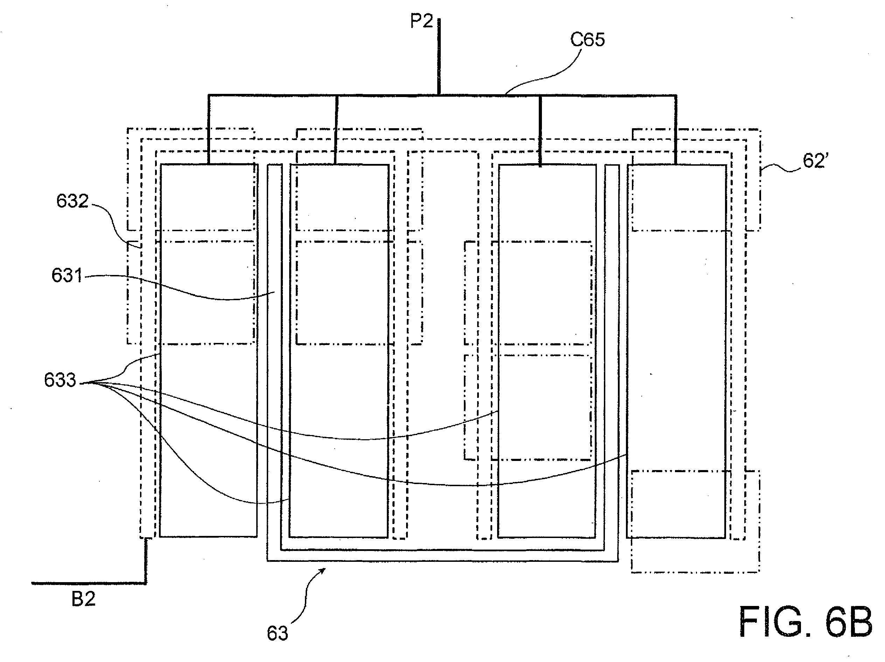

A titre d'exemple, les figures 6A et 6B sont des représentations d'un troisième mode de réalisation d'un dispositif de détection de rayonnement électromagnétique conforme à l'invention, prévue pour un sous-ensemble 600 de seize détecteurs élémentaires 62. La figure 6A illustre le positionnement des seize détecteurs élémentaires 62 disposant chacun d'une première borne 67 pour les relier au dispositif d'adaptation d'impédance 63, agencés entre eux avec une symétrie axiale d'ordre quatre sous la forme de quatre colonnes de quatre détecteurs élémentaires 62, intégrés dans un premier plan. Le sous-ensemble 600 comporte donc des détecteurs élémentaires 62 issus de quatre colonnes et de quatre lignes de la matrice, chaque colonne du sous-ensemble appartenant à une colonne de la matrice. Les détecteurs élémentaires 62 sont reliés par une deuxième borne 68 à une première source de tension P1 au moyen de connexions C61 à C64, une connexion par colonne du sous-ensemble 600. Chaque connexion C61 à C64 est reliée à quatre détecteurs élémentaires 62 au moyen de liaisons électriques 69 comportant chacune un interrupteur 64. Chaque interrupteur 64 est agencé de manière à ne pouvoir connecter à une connexion C61, C62, C63 ou C64 qu'un seul détecteur élémentaire 62.

Conformément aux possibilités offertes par les structures monolithique ou hybride déjà décrites, un transistor d'adaptation 63 commun aux seize détecteurs élémentaires 62 est localisé dans un deuxième plan, différent d'un premier plan défini par les détecteurs élémentaires 62. Les deux plans sont avantageusement superposés. Les connexions C61 à C64 et/ou les liaisons électriques 69 et les interrupteurs 64 peuvent aussi être localisées dans le deuxième plan, ou dans un troisième plan. Le deuxième plan, comprenant entre autre un transistor d'adaptation 63 sera mieux décrit plus loin, en lien avec la figure 6B. La juxtaposition des différents plans se trouvera mieux expliquée lors de la description de la figure 9 ci-dessous.

Le transistor d'adaptation 63 est partiellement représenté dans la figure 6A par son électrode de source 631 délimitée en grands pointillés et par son électrode de drain 632 montrée en petits pointillés. Dans l'exemple de la figure 6, les électrodes de source 631 et de drain 632 sont interdigitées. La grille du transistor n'est pas représentée pour simplifier la figure mais elle s'étend, comme il se doit, entre la source et le drain du transistor d'adaptation 63, non représentés. Elle est alors morcelée en plusieurs parties de grille orientées suivant les colonnes de détecteurs élémentaires 62 du sous-ensemble 600. Dans le cas particulier de ce mode de réalisation, l'électrode de source 631 à une forme de « U », avec une branche du U s'étendant entre les deux premières colonnes de détecteurs élémentaires, à gauche sur la figure 6A, et l'autre branche du U s'étendant entre les deux autres colonnes de détecteurs élémentaires, à droite sur la figure 6A.

L'électrode de drain 632 est formée de façon à s'interdigiter avec l'électrode de source 631. Dans ce cas, elle a une forme de peigne comprenant plusieurs branches, chaque branche de l'électrode de source 631 étant située entre deux branches voisines de l'électrode de drain 632. Ici, comme l'électrode de source 631 à une forme en U, l'électrode de drain a une forme de peigne à quatre branches. Alternativement ce peut être un peigne à trois branches si les deuxième et troisième branches représentées ici sont regroupées pour ne faire qu'une seule branche. Les premières bornes 67 des différents détecteurs élémentaires 62 sont chacune reliées à l'électrode de source 631 du transistor d'adaptation 63 par une interconnexion 66.

Dans l'exemple de la figure 6A, les premières bornes 67 sont reliées électriquement quatre par quatre en un noeud A ; le noeud A étant situé en un point de l'électrode de source 631. Il y a donc quatre noeuds A reliant des détecteurs élémentaires 62 à l'électrode de source 631.

Le transistor d'adaptation est décrit de façon plus détaillée en observant la figure 6B. La grille 633 y est formée de quatre parties situées chacune entre respectivement une branche de l'électrode de source 631 et une branche de l'électrode de drain 632. Les parties de la grille 633 sont larges comparées aux électrodes de source 631 et de drain 632, elles occupent quasiment tout l'espace entre une branche de l'électrode de source 631 et une branche de l'électrode de drain 632.

Ainsi, les parties de la grille 633 prennent la forme de rectangles sensiblement orientés suivant une colonne de détecteurs élémentaires 62 du sous-ensemble. Les différentes parties de la grille 633 sont connectées entre elles par des connexions électriques C65 de façon à former une seule grille 633 reliée à une deuxième source de tension P2, permettant de faire fonctionner le transistor d'adaptation 63 en saturation.

L'électrode de drain 632 est reliée par une connexion électrique à un bus de lecture B2.

Sur la figure 6B, on observe en traits pointillés un positionnement 62' possible de quelquesuns des seize détecteurs élémentaires du sous-ensemble 600 présentés dans la figure 6A, situés dans le premier plan, différent du deuxième plan contenant le transistor d'adaptation 63.

Il est possible, si deux branches de l'électrode de drain 632 sont voisines et non séparées par une branche de l'électrode de source 631, de construire le transistor d'adaptation de façon à ce que ces deux branches de l'électrode de drain soient fusionnées en une seule branche.

Ce mode de réalisation permet de fabriquer un transistor d'adaptation 63 de taille conséquente qui peut s'inscrire dans l'emprise de seize détecteurs élémentaires 62, avec une surface de grille pouvant être supérieure à la surface principale d'un détecteur, voire supérieure aux surfaces principales de deux, trois, cinq, dix ou quinze détecteurs élémentaires ou plus cumulées entre elles.

Une construction selon ce mode de réalisation peut être étendue à un sous-ensemble comprenant plus de seize détecteurs élémentaires. Il peut par exemple y avoir trente-six détecteurs élémentaires, agencés en six lignes et six colonnes, reliées quatre par quatre à l'électrode de source. L'électrode de source a alors la forme d'un « W », peigne à trois branches.

Il est possible d'avoir vingt-quatre détecteurs élémentaires dans le sous-ensemble, formant soit quatre lignes de six colonnes ou quatre colonnes de six lignes. Alors l'électrode de source peut avoir respectivement la forme d'un U ou d'un W.

Comme dans chaque mode de réalisation de l'invention où les détecteurs élémentaires sont dans un premier plan différent d'un deuxième plan comportant le transistor d'adaptation, la surface de grille du transistor d'adaptation peut être supérieure ou égale à celle de 60% ou 75% ou 80% ou même 90% d'une surface de sous-ensemble, définie comme étant une somme des surfaces principales de tous les détecteurs élémentaires du sous-ensemble.

Le restant de la surface du sous-ensemble, dans le deuxième plan, comme cela est illustré plus bas en figure 9, est nécessaire pour :

-   former les électrodes de source et de drain,
-   former une source et un drain sous ces dites électrodes,
-   acheminer le bus de lecture, former des connexions électriques alimentant la grille, des interrupteurs, des connexions de commande pour organiser un multiplexage de lecture au moyen des interrupteurs et tout autre élément électrique ou électronique nécessaire au fonctionnement d'un détecteur, en particulier d'une photodiode ou d'un microbolomètre.

Un des avantages de construire le transistor d'adaptation avec une électrode de source formant un peigne dont les branches sont espacées par deux colonnes de détecteurs élémentaires est de pouvoir former des interconnexions très courtes ayant toutes une même géométrie. Par conséquent les interconnexions ont toutes sensiblement une même valeur de résistance électrique.

L'invention comporte de préférence des interconnexions, reliant chaque détecteur élémentaire au dispositif d'adaptation d'impédance, ayant des dimensions sensiblement égales de façon à avoir des résistances sensiblement égales.

Outre la résistance due à un rayonnement électromagnétique, chaque circuit de capture et de mise en forme perçoit une impédance résiduelle comprenant d'une part la résistance des interconnexions et d'autre part une impédance localisée entre le dispositif d'adaptation d'impédance et le circuit de capture et de mise en forme. Cette impédance est réduite par le dispositif d'adaptation d'impédance. Ainsi, dans toute la matrice, les impédances résiduelles sont sensiblement identiques et il y a une réduction globale de résistances parasites.

Cependant, il est possible d'obtenir l'égalité de la valeur de résistance des interconnexions en donnant aux interconnexions des dimensions différentes les unes par rapport aux autres. En particulier, il est possible d'obtenir des résistances sensiblement égales pour des détecteurs élémentaires situés à des distances différentes du même dispositif d'adaptation d'impédance.

Pour ce faire, la présente invention propose d'accroître artificiellement la résistance d'au moins une interconnexion issue d'un détecteur élémentaire proche du dispositif d'adaptation d'impédance par rapport à la résistance d'une interconnexion issue d'un autre détecteur élémentaire plus éloigné du dispositif d'adaptation d'impédance de manière à ce que les résistances des deux interconnexions soient sensiblement égales. L'inverse est possible en réduisant la résistance de l'interconnexion issue d'un détecteur élémentaire plus éloigné.

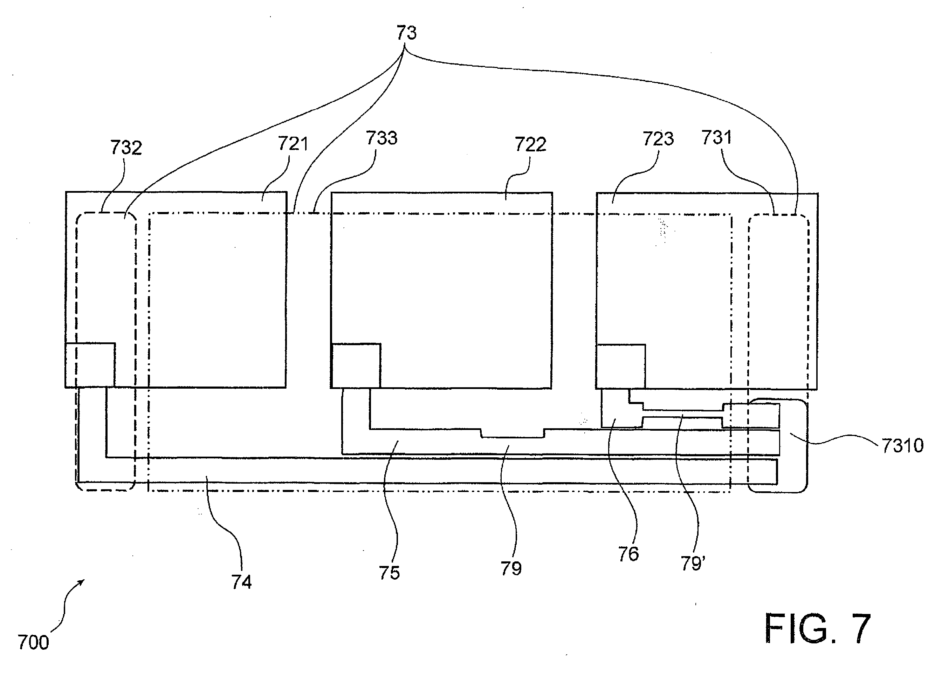

La figure 7 illustre un exemple particulier de ce mode de réalisation de l'invention, en particulier quand il n'est pas formé de symétrie particulière dans l'arrangement entre les détecteurs élémentaires d'un sous-ensemble.

Un sous-ensemble 700 comporte un premier, un deuxième et un troisième détecteur élémentaire, respectivement notés, de gauche à droite, 721, 722 et 723 et disposés dans un premier plan, organisés en une ligne. Dans un deuxième plan, différent du premier plan, est formé un transistor d'adaptation 73 commun aux trois détecteurs élémentaires. Les deux plans sont superposés, les détecteurs élémentaires 721, 722, 723 étant en regard d'au moins une partie du transistor d'adaptation 73. Le transistor d'adaptation 73 comporte une source 731 située au niveau du troisième détecteur élémentaire 723, un drain 732 situé au niveau du premier détecteur élémentaire 721 et une grille 733 intercalée entre la source 731 et le drain 732. La grille 733 est présente sous au moins le deuxième détecteur élémentaire 722 et sous une partie des premier et troisième détecteurs élémentaires 721 et 723. L'électrode de source 7310 est située au niveau du troisième détecteur élémentaire 723. Le troisième détecteur élémentaire 723, est plus proche de l'électrode de source 7310 que le deuxième détecteur élémentaire 722, lui même plus proche que le premier détecteur élémentaire 721.

Les détecteurs élémentaires 721, 722, 723, sont respectivement reliés à l'électrode de source 7310 au moyen d'interconnexions 74, 75, 76.

De façon à compenser des variations de résistance entre ces interconnexions dues aux différences de distances entre les détecteurs élémentaires 721, 722, 723 et l'électrode de source 7310, l'exemple de la figure 7 propose d'accroitre artificiellement les résistances des deux interconnexions 75, 76 issues des détecteurs élémentaires 722, 723 les plus proches de l'électrode de source 7310 pour les rendre sensiblement égales à la résistance de l'interconnexion 74 issue du détecteur élémentaire 721 le plus éloigné de l'électrode de source 7310.

On définit un plus court chemin possible pour relier un détecteur élémentaire à une électrode de source en prenant en compte des positions relatives et des encombrements des autres détecteurs élémentaires, des autres interconnexions et de l'électrode de source. On peut donc définir une longueur la plus courte possible pour relier un détecteur élémentaire à l'électrode de source.

Un moyen pour accroître la résistance d'une interconnexion est d'allonger la longueur de l'interconnexion au-delà de la longueur la plus courte possible.

Cette solution, intéressante, risque cependant d'encombrer le dispositif de détection avec des longueurs inutiles d'interconnexions.

Les interconnexions sont normalement réalisées avec une section d'interconnexion sensiblement égale pour toutes les interconnexions du dispositif de détection de rayonnement électromagnétique. Nous dénommerons par la suite par section nominale une telle section, commune à la plupart des interconnexions, ou au moins à une partie de la plupart des interconnexions. De plus, les interconnexions sont définies comme ayant une longueur donnée.

L'invention propose d'introduire un rétrécissement de la section d'une interconnexion dont on veut augmenter la résistance, sur au moins une partie de sa longueur, voire sur toute sa longueur. Un tel rétrécissement de section conduit à obtenir une résistance plus importante. En adaptant la longueur de la partie ayant une section réduite, il est possible d'adapter la valeur de l'accroissement de résistance. Une telle réduction de section 79, 79' est représentée sur les interconnexions 75, 76 reliant les deuxième et troisième détecteurs élémentaires 722, 723 à l'électrode de source 7310.

Il est possible aussi de mélanger les deux méthodes, par exemple en allongeant la longueur d'une interconnexion au-delà de la longueur la plus courte possible et de plus en réduire la section sur une longueur donnée.

Si au contraire on cherche à réduire la résistance d'interconnexions issues de détecteurs élémentaires plus éloignés que d'autres détecteurs élémentaires, il est possible d'élargir la section de ces interconnexions sur au moins une partie de leur longueur ou sur toute leur longueur.

Ainsi, il est possible d'élargir la section de certaines interconnexions dont on désire réduire la valeur de résistance et de réduire la section et/ou augmenter la longueur de certaines interconnexions dont on désire augmenter la valeur de résistance.

Une telle méthode permet de former des sous-ensembles dans lesquels la valeur de résistance est sensiblement égale pour toutes les interconnexions sans nécessiter de symétrie dans l'arrangement des détecteurs élémentaires. Il peut par exemple y avoir un nombre impair de détecteurs élémentaires. Il n'y a ainsi pas de nécessité de chercher à former l'électrode de source à une distance égale des différents détecteurs élémentaires. Cela permet de simplifier la fabrication et le dessin des transistors d'adaptation. Il est de plus possible de prévoir des transistors d'adaptation ayant un dimensionnement optimal et de définir des sous-ensembles de détecteurs élémentaires ensuite, par exemple en choisissant des détecteurs élémentaires en regard du transistor d'adaptation.

Il est préférable de former des sous-ensembles comprenant des arrangements symétriques de détecteurs élémentaires de façon à réduire la longueur des interconnexions et permettre d'obtenir plus facilement des interconnexions de résistance sensiblement égales. Cependant l'homme du métier saura faire le compromis entre faciliter l'obtention de résistances sensiblement égales et faciliter le dessin des transistors d'adaptation d'impédance.

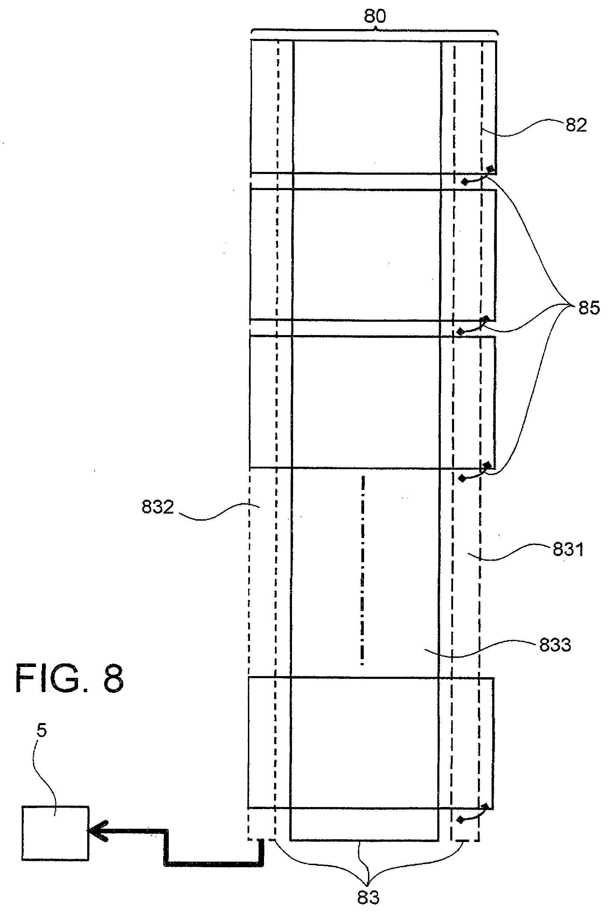

La figure 8 illustre une autre façon d'appliquer l'invention. Ce mode de réalisation suppose que les détecteurs élémentaires 82 d'une même colonne 80 de la matrice appartiennent à un même sous-ensemble de détecteurs élémentaires et soient dans un même plan, dit premier plan. Il est formé dans un deuxième plan, différent du premier plan, un transistor d'adaptation d'impédance 83 commun à tous les détecteurs élémentaires 82.

Le transistor d'adaptation 83 comporte une électrode de source 831 positionnée le long de la colonne 80 sur toute la longueur de la colonne 80 de détecteurs élémentaires, à droite sur la figure 8. L'électrode de source est située sensiblement d'un coté des détecteurs élémentaires 82 de la colonne 80 de détecteurs et dans un plan différent.

Le transistor d'adaptation 83 comporte une électrode de drain 832 positionnée le long de la colonne 80 sur toute la longueur de la colonne 80 de détecteurs élémentaires en regard de l'électrode de source 831 de l'autre côté des détecteurs élémentaires, à gauche sur la figure 8, dans un plan différent des détecteurs élémentaires. Une grille 833 s'étend sensiblement entre l'électrode de source 831 et l'électrode de drain 832. La grille 833 est donc située sur ou sous les détecteurs élémentaires 82 selon l'orientation d'un observateur vis-à-vis du dispositif étudié, dans un plan différent. L'électrode de source 831, l'électrode de drain 832 et la grille 833 ne sont alors pas en contact électrique direct avec les détecteurs élémentaires 82.

L'électrode de source 831 est cependant reliée électriquement aux détecteurs élémentaires 82 au moyen d'interconnexions 85. Dans l'exemple de la figure 8, au moins une partie de l'électrode de source 831 est en regard d'au moins une partie de chaque détecteur élémentaire 82. En conséquence, les détecteurs élémentaires sont reliés à l'électrode de source 831 par un plus court chemin. Par exemple, pour deux détecteurs élémentaires 82 voisins, l'interconnexion 85 issue l'un des détecteurs élémentaires 82 passe entre les deux détecteurs élémentaires. Selon un autre exemple, il peut y avoir des interconnexions verticales s'étendant verticalement entre un plan où se trouve l'électrode de source 831 et le premier plan contenant les détecteurs élémentaires 82.

L'électrode de drain 832 est reliée à un circuit de capture et de mise en forme 5.

Selon ce mode de réalisation, les interconnexions 85 ont des résistances sensiblement égales. De plus, le transistor d'adaptation 83, commun à tous les détecteurs élémentaires 82 de la colonne 80 a des dimensions telles que sa transconductance est aussi élevée que possible.

Un tel mode de réalisation peut être adapté en ce que le sous-ensemble est formé d'une fraction de colonne de la matrice, c'est-à-dire que le sous-ensemble est composé de détecteurs élémentaires formant une fraction d'une colonne de la matrice. Il peut donc y avoir plusieurs sous-ensembles dans une colonne. Une autre adaptation de ce mode de réalisation est possible en formant le sous-ensemble comme étant composé de deux colonnes ou plus. Un transistor d'adaptation est alors commun à des détecteurs élémentaires situés dans deux colonnes de la matrices ou plus.

Le sous-ensemble peut être formé de fractions de colonnes provenant de deux colonnes ou plus, formant un groupe de colonnes. Dans ces cas là, l'électrode de source est avantageusement située le long des détecteurs élémentaires d'une colonne située à une extrémité du groupe de colonnes et l'électrode de drain située long des détecteurs élémentaires d'une colonne située à une autre extrémité du groupe de colonnes. De plus, les interconnexions ont des résistances sensiblement égales pour tous les détecteurs élémentaires. Alors, certaines interconnexions doivent avoir une résistance accrue par rapport à la résistance qu'elles auraient si elles reliaient des détecteurs élémentaires à l'électrode de source par le chemin le plus court possible.

La figure 9 illustre une coupe d'un mode de réalisation d'un dispositif de détection selon l'invention montrant deux détecteurs élémentaires 92, 92' d'un même sous-ensemble présents dans un premier plan G et un transistor d'adaptation 93 présent dans un deuxième plan G'. Le premier plan G et le deuxième plan G' sont superposés, le transistor d'adaptation 93 étant en regard des deux détecteurs élémentaires 92, 92'.

Les détecteurs élémentaires 92, 92' peuvent être positionnés au niveau d'une surface d'une couche de matériau diélectrique 94, dite couche diélectrique, présente elle-même sur un substrat 90. Le deuxième plan G' est défini par une interface entre la couche diélectrique 94 et le substrat 90.

Dans la couche diélectrique 94 sont présents :

- des électrodes de source 931 et de drain 932,
- un bus de lecture B2 relié à l'électrode de drain 932,
- des interconnexions 921 et 921' reliant les détecteurs élémentaires 92, 92' à l'électrode de source 931,
- une électrode de grille 95.

Il n'est représenté ni d'interrupteur ni de liaisons électriques reliant les détecteurs élémentaires aux interrupteurs de façon à simplifier la figure.

Les interconnexions 921, 921', les liaisons électriques et le bus de lecture B2 peuvent être considérés soit comme étant dans le deuxième plan G' dans le sens où ils sont compris entre les détecteurs élémentaires 92, 92' et le substrat 90, soit comme étant dans d'autres plans, intercalés entre les premier et deuxième plans G, G'.

En variante, certains détecteurs élémentaires 92', voire tous, peuvent être séparés de la couche diélectrique 94 par une lame d'air 97. La lame d'air peut éventuellement être sous faible pression barométrique. Elle peut être propre à chaque détecteur élémentaire 92' concerné ou commune à plusieurs de ceux-ci. De préférence, ces détecteurs élémentaires 92' séparés de la couche diélectrique 94 par une lame d'air, sont reliés mécaniquement à la couche diélectrique 94 par un ou plusieurs supports 98, 98'. Les supports peuvent avantageusement être des piliers. Ceux-ci sont de préférence situés en bordure du détecteur élémentaire 92' et servent à maintenir ledit détecteur élémentaire 92' en une position fixe vis-à-vis de la couche diélectrique 94. Certains de ces piliers peuvent être formés par une partie de l'interconnexion 921' reliant ledit détecteur élémentaire à l'électrode de source 931 du transistor d'adaptation, ou contenir une partie de l'interconnexion 921'.

Le substrat 90 comporte, une source 901 et un drain 902 reliés respectivement à l'électrode de source 931 et à l'électrode de drain 932.

Avantageusement, la source 901 et le drain 902 sont positionnés de façon à être situés à deux extrémités opposées d'un sous-ensemble défini par les deux détecteurs élémentaires 92, 92', respectivement à gauche et à droite dans la figure 9.

La grille 95 s'étend entre la source et le drain, dans la couche diélectrique 94, isolée du substrat 90 par une couche d'oxyde de grille 96. La grille a une longueur L supérieur à un unique pas P de répétition entre les détecteurs élémentaires 92, 92'.

L'un des deux détecteurs élémentaires 92, est plus proche de l'électrode de source 931 que ne l'est l'autre des deux détecteurs élémentaires 92'. Il est alors représenté une portion d'interconnexion 97 permettant d'accroître artificiellement la résistance de l'interconnexion 921 reliant à l'électrode de source 931 le détecteur élémentaire 92 le plus proche de l'électrode de source 931.

Dans les différents modes de réalisations de l'invention, comme il l'a déjà été présenté en lien avec la figure 3, il est possible de mutualiser dans chaque sous-ensemble, non pas juste un dispositif d'adaptation d'impédance seul, mais aussi un circuit de capture et de mise en forme. Cette situation convient principalement pour des dispositifs de détections de rayonnement électromagnétiques dans des longueurs d'ondes du visible, comprenant des détecteurs élémentaires du type photodiode.

L'invention permet d'augmenter la surface de grille du transistor d'adaptation proportionnellement au nombre de détecteurs élémentaires présent dans le même sous-groupe sans introduire de résistance parasites qui créent un bruit spatial différent pour chaque détecteur élémentaire du sous-groupe. Il en résulte, en premier lieu, conformément à la relation {3} décrite plus haut, que le bruit dû au transistor d'adaptation est réduit et que le rapport signal à bruit du dispositif de détection de rayonnement électromagnétique est augmenté en conséquence par rapport à un dispositif selon le brevet référencé [3].

Un deuxième avantage, toujours en référence à la relation {3}, est de pouvoir augmenter, par rapport à l'état de la technique, le courant de lecture dans chaque détecteur élémentaire, par un même ratio que l'augmentation de la surface de grille permise par l'invention, sans introduire de bruit supplémentaire en provenance du transistor d'adaptation.

Il s'ensuit, notamment lorsque le détecteur élémentaire est du type à bolomètre ou à microbolomètre, qu'il est possible d'avoir une variation de résistance du microbolomètre perceptible de façon amplifiée, au prorata de l'augmentation du courant de lecture. Le signal délivré par les détecteurs élémentaires peut donc subir une amplification. Cela permet là aussi d'améliorer le rapport signal à bruit du dispositif de détection de rayonnement électromagnétique.

Cet avantage est particulièrement apprécié avec les détecteurs élémentaires de petite surface principale, avec un pas inférieur à $25\mu$m, qui sont pénalisés par une faible surface de capture du rayonnement électromagnétique incident et nécessitent donc toute amplification possible du signal délivré.

Un autre avantage apporté par l'utilisation d'une surface supérieure pour dessiner le transistor d'adaptation est de pouvoir ajuster indépendamment la longueur L et la largeur W de la grille du transistor d'adaptation. On peut ainsi obtenir une transconductance du transistor d'adaptation plus importante et par voie de conséquence un rendement d'injection plus important défini par la relation {1}.

Cet effet intervient en complément du bénéfice déjà apporté par l'augmentation du courant de lecture qui participe elle aussi à l'accroissement de la transconductance, l'ensemble de ces deux effets se cumulant pour obtenir une meilleure restitution du signal délivré et donc un meilleur rapport signal à bruit du dispositif de détection de rayonnement électromagnétique.

L'augmentation de transconductance qu'apporte l'invention peut aussi être utilisée pour réaliser un couplage en injection directe de détecteurs élémentaires qui ont une faible impédance dynamique. Il peut s'agir par exemple de bolomètres ou de microbolomètres de faible résistance électrique. Ceux-ci sont tout particulièrement requis lorsque l'on souhaite utiliser une technologie de transistor alimenté sous tension réduite, comme c'est le cas par exemple des technologies CMOS les plus avancées en terme de résolution photolithographique. En augmentant le courant de lecture et le rapport signal à bruit, il est possible d'utiliser des détecteurs élémentaires dont l'influence intrinsèque sur la résistance est plus faible et qui pourrait autrement être masquée par le bruit.

L'utilisation de transistors ayant une plus grande surface de grille offre en outre des caractéristiques plus uniformes, notamment des tensions de seuil plus homogènes à l'échelle du dispositif de détection de rayonnement électromagnétique, ce qui diminue le bruit spatial fixe généré au niveau des pixels de la matrice. Il est en effet connu qu'en dessous de d'une longueur de grille L voisine de $2\mu m$, des dispersions de tensions de seuil introduisent une augmentation significative du bruit spatial fixe dû au transistor d'adaptation. En effet, pour obtenir une polarisation donnée, il est alors nécessaire d'augmenter la largeur W du transistor d'adaptation, mais cela requiert aussi d'augmenter la longueur L du transistor d'adaptation. Cela est difficile selon l'état de la technique mais cela est rendu possible par l'utilisation de l'invention.

L'invention enseigne par ailleurs qu'il est possible de former un transistor d'adaptation à injection directe ayant une surface de grille importante, commun à plusieurs détecteurs élémentaires, tout en bénéficiant d'un couplage électrique homogène pour tous les détecteurs élémentaires du dispositif de détection de rayonnement électromagnétique. Ce caractère d'homogénéité concerne tout particulièrement la résistance des interconnexions situées entre les détecteurs élémentaires et l'électrode de source de chaque transistor d'adaptation. Cette résistance est connue pour être particulièrement critique au regard du bruit spatial fixe qui affecte de manière différente chaque pixel du dispositif de détection de rayonnement électromagnétique.

L'invention apporte ainsi une solution pour réaliser un capteur d'image, ou imageur qui présente à la fois un bruit temporel réduit par un recours à des transistors d'adaptation ayant une surface de grille importante, et un bruit spatial réduit au niveau des pixels par un recours conjoint à des transistors d'adaptation ayant une surface de grille importante et à un couplage homogène au moyens de résistance d'interconnexions sensiblement égales.

Un autre avantage de l'invention, relativement à certaines réalisations de l'état de la technique, est de pouvoir disposer de transistors d'adaptation d'impédance ayant une surface de grille importante, commun à un sous-ensemble de détecteurs élémentaires qui sont localisés dans un proche voisinage au sein de la matrice et qui peuvent appartenir à des colonnes et à des lignes différentes de la matrice. Cet agencement évite de particulariser les différentes colonnes ou les différentes lignes de la matrice et prévient l'apparition d'un bruit spatial à composante colonnaire ou linéaire qui est particulièrement nuisible à la qualité et à l'exploitation de toute image produite par le dispositif de détection de rayonnement électromagnétique. Il est en effet possible de former des sous-ensembles de détecteurs élémentaires de manière à ce que les circuits de capture et de mise en forme du signal ne soient pas reliés à l'ensemble des détecteurs élémentaires d'une même colonne.

## RÉFÉRENCES CITÉES

[1] « Infrared readout electronics: a historical perspective », M.J. Hewitt, J.L. Vampola, S.H. Black, C.J. Nielsen, Proc. of SPIE Vol. 2226 Infrared Readout Electronics II, pages 108-119 (1994).

[2] « LETI/LIR' amorphous silicon unccooled microbolometer development », J.L. Tissot, F. Rothan, C. Vedel, M. Vilain, JJ. Yon, Proc. of SPIE Vol. 3379 Infrared Detectors and Focal Plane Arrays V, pages 139-144 (1998).

[3] US-B-6 028 309.

## Revendications

**1.** Dispositif de détection d'un rayonnement électromagnétique comportant de multiples détecteurs élémentaires (32, 320, 62, 82, 92) regroupés en un ou plusieurs sous-ensembles (300, 300', 600) comportant chacun plusieurs détecteurs élémentaires, chaque détecteur élémentaire (32, 320, 62, 82, 92) étant relié par une interconnexion (301, 302, 66, 85) à un dispositif d'adaptation d'impédance (33, 33', 63, 83, 93) adapté pour faire l'adaptation d'impédance entre ledit détecteur élémentaire et un circuit de capture et de mise en forme, **caractérisé en ce que** :

le dispositif d'adaptation d'impédance (33, 33', 63, 83, 93) est commun à tous les détecteurs élémentaires (32, 320, 62, 82, 92) d'un unique sous-ensemble (300, 300', 600),
dans chaque sous-ensemble (300, 300', 600) les interconnexions (301, 302, 66, 85) possèdent sensiblement une même valeur de résistance.

2. Dispositif selon la revendication 1, dans lequel les détecteurs élémentaires (32, 320, 62, 82, 92) sont des bolomètres ou des microbolomètres, des photodiodes ou des photoconducteurs.

3. Dispositif selon la revendication 2, dans lequel, lorsque les détecteurs élémentaires (32, 320, 62, 82, 92) sont des photodiodes, le dispositif d'adaptation d'impédance (33, 33', 63, 83, 93) est relié à un circuit de capture et de mise en forme (5, 5') commun à tous les détecteurs élémentaires (32, 320, 62, 82, 92) d'un unique sous-ensemble (300, 300', 600).

4. Dispositif selon l'une des revendications 1 ou 2, le dispositif d'adaptation d'impédance (33, 33', 63, 83, 93) est relié à un circuit de capture et de mise en forme (5, 5') commun à plusieurs sous-ensembles (300, 300', 600).

5. Dispositif selon l'une des revendications 1 à 4, dans lequel chaque détecteur élémentaire (32, 320, 62, 82, 92) est en série avec un interrupteur (34, 340, 64) qui lui est propre, les interrupteurs d'un même sous-ensemble (300, 300', 600) prenant une position fermée de façon séquentielle de façon à ce qu'un bus de lecture (B1, B2, B2') relié au dispositif d'adaptation d'impédance (33, 33', 63, 83, 93) reçoive un signal provenant d'un seul détecteur élémentaire (32, 320, 62, 82, 92) à la fois.

6. Dispositif selon l'une des revendications 1 à 5, dans lequel le dispositif d'adaptation d'impédance (33, 33', 63, 83, 93) est un transistor à injection directe réglé en saturation, dit transistor d'adaptation, les détecteurs élémentaires (32, 320, 62, 82, 92) étant reliés à une électrode de source (631, 7310, 831, 931) du transistor d'adaptation (32, 320, 62, 82, 92).

7. Dispositif selon l'une des revendications 1 à 6, dans lequel les détecteurs élémentaires (32, 320, 62, 82, 92) définissent un premier plan (G), différent d'un deuxième plan (G') comprenant le dispositif d'adaptation d'impédance (33, 33', 63, 83, 93), les deux plans (G, G') étant superposés et le dispositif d'adaptation d'impédance (33, 33', 63, 83, 93) étant en regard avec au moins une partie des détecteurs élémentaires (32, 320, 62, 82, 92).

8. Dispositif selon la revendication 7 dans son application à la revendication 6, dans lequel le transistor d'adaptation (33, 33', 63, 83, 93) a une surface de grille supérieure à une surface principale d'un détecteur élémentaire (32, 320, 62, 82, 92) du sous-ensemble (300, 300', 600).

9. Dispositif selon la revendication 8, dans lequel le transistor d'adaptation (33, 33', 63, 83, 93) a une surface de grille supérieure à une surface correspondant à une somme des surfaces principales de plusieurs détecteurs élémentaires (32, 320, 62, 82, 92) d'un même sous-ensemble (300, 300', 600).

10. Dispositif selon l'une des revendications 1 à 9, dans lequel les interconnexions (301, 302, 66, 85), reliant chacune le dispositif d'adaptation d'impédance à un détecteur élémentaire (32, 320, 62, 82, 92), sont de dimensions sensiblement identiques.

11. Dispositif selon l'une des revendications 1 à 9, dans lequel au moins une interconnexion (301, 302, 66, 85) voit sa résistance accrue ou réduite, par rapport à la résistance qu'elle aurait si elle reliait le détecteur élémentaire (32, 320, 62, 82, 92) à une borne donnée du dispositif d'adaptation d'impédance (33, 33', 63, 83, 93) par un chemin le plus court possible en technologie microélectronique, au moins un détecteur élémentaire (32, 320, 62, 82, 92) étant plus éloignés de la borne du dispositif d'adaptation d'impédance (33, 33', 63, 83, 93) qu'un autre détecteur élémentaire (32, 320, 62, 82, 92) du même sous-ensemble (300, 300', 600).

12. Dispositif selon la revendication 11, dans lequel au moins une interconnexion de longueur donnée, reliant le dispositif d'adaptation d'impédance à un détecteur élémentaire, a, sur au moins une partie de sa longueur, une section différente d'au moins une partie d'une autre interconnexion reliant le dispositif d'adaptation d'impédance à un autre détecteur élémentaire du même sous-ensemble.

**13.** Dispositif selon la revendication 12, dans lequel l'interconnexion (301, 302, 66, 85), reliant le dispositif d'adaptation d'impédance à un détecteur élémentaire, ayant une résistance accrue et une longueur donnée, comporte un rétrécissement de section sur au moins une partie de sa longueur.

**14.** Dispositif selon l'une des revendications 1 à 13, dans lequel, les détecteurs élémentaires (32, 320, 62, 82, 92) étant agencés en une matrice comportant des lignes et des colonnes de détecteurs élémentaires, le sous-ensemble (300, 300', 600) comporte différents détecteurs élémentaires (32, 320, 62, 82, 92) situés sur plusieurs lignes et différents détecteurs élémentaires (32, 320, 62, 82, 92) situés sur plusieurs colonnes de la matrice.

**15.** Dispositif selon l'une des revendications 1 à 14, dans lequel les détecteurs élémentaires (32, 320, 62, 82, 92) d'un même sous-ensemble (300, 300', 600) sont agencés selon une symétrie axiale d'ordre donné.

## Patentansprüche

**1.** Vorrichtung zur Erfassung einer elektromagnetischen Strahlung, umfassend mehrere Elementardetektoren (32, 320, 62, 82, 92), die in einer oder mehreren Untergruppen (300, 300', 600) gruppiert sind, welche jeweils mehrere Elementardetektoren umfassen, wobei jeder Elementardetektor (32, 320, 62, 82, 92) mittels einer Zwischenverbindung (301, 302, 66, 85) mit einer Impedanzanpassungsvorrichtung (33, 33', 63, 83, 93) verbunden ist, die dazu ausgelegt ist, die Impedanzanpassung zwischen dem Elementardetektor und einer Einfang- und Formungsschaltung vorzunehmen, **dadurch gekennzeichnet, dass**:

die Impedanzanpassungsvorrichtung (33, 33', 63, 83, 93) allen Elementardetektoren (32, 320, 62, 82, 92) einer einzigen Untergruppe (300, 300', 600) gemeinsam ist,
und dass in jeder Untergruppe (300, 300', 600) die Zwischenverbindungen (301, 302, 66, 85) im Wesentlichen ein und denselben Widerstandswert besitzen.

**2.** Vorrichtung nach Anspruch 1, bei der die Elementardetektoren (32, 320, 62, 82, 92) Bolometer oder Mikrobolometer, Photodioden oder Photoleiter sind.

**3.** Vorrichtung nach Anspruch 2, bei der dann, wenn die Elementardetektoren (32, 320, 62, 82, 92) Photodioden sind, die Impedanzanpassungsvorrichtung (33, 33', 63, 83, 93) mit einer Einfang- und Formungsschaltung (5, 5') verbunden ist, die allen Elementardetektoren (32, 320, 62, 82, 92) einer einzigen Untergruppe (300, 300' 600) gemeinsam ist.

**4.** Vorrichtung nach einem der Ansprüche 1 oder 2, wobei die Impedanzanpassungsvorrichtung (33, 33' 63, 83, 93) mit einer Einfang- und Formungsschaltung (5, 5') verbunden ist, die mehreren Untergruppen (300, 300', 600) gemeinsam ist.

**5.** Vorrichtung nach einem der Ansprüche 1 bis 4, bei der jeder Elementardetektor (32, 320, 62, 82, 92) in Reihe mit einem ihm eigenen Unterbrecher (34, 340, 64) ist, wobei die Unterbrecher ein und derselben Untergruppe (300, 300', 600) eine geschlossene Position in sequentieller Weise derart einnehmen, dass ein Lesebus (B1, B2, B2'), der mit der Impedanzanpassungsvorrichtung (33, 33' 63, 83, 93) verbunden ist, ein Signal empfängt, welches an einem Zeitpunkt von einem einzigen Elementardetektor (32, 320, 62, 82, 92) stammt.

**6.** Vorrichtung nach einem der Ansprüche 1 bis 5, bei der die Impedanzanpassungsvorrichtung (33, 33' 63, 83, 93) ein in Sättigung geregelter Transistor mit direkter Injektion ist, genannt Anpassungstransistor, wobei die Elementardetektoren (32, 320, 62, 82, 92) mit einer Source-Elektrode (631, 7310, 831, 931) des Anpassungstransistors (32, 320, 62, 82, 92) verbunden sind.

**7.** Vorrichtung nach einem der Ansprüche 1 bis 6, bei der die Elementardetektoren (32, 320, 62, 82, 92) eine erste Ebene (G) definieren, die verschieden ist von einer zweiten Eben (G'), die die Impedanzanpassungsvorrichtung (33, 33', 63, 83, 93) enthält, wobei die zwei Ebenen (G, G') überlagert sind, und wobei die Impedanzanpassungsvorrichtung (33, 33' 63, 83, 93) wenigstens einem Teil der Elementardetektoren (32, 320, 62, 82, 92) gegenüber ist.

**8.** Vorrichtung nach Anspruch 7 bei Anwendung auf Anspruch 6, wobei der Anpassungstransistor (33, 33' 63, 83, 93) eine Gitteroberfläche größer als eine Hauptoberfläche eines Elementardetektors (32, 320, 62, 82, 92) der Untergruppe (300, 300', 600) hat.

**9.** Vorrichtung nach Anspruch 8, bei der der Anpassungstransistor (33, 33', 63, 83, 93) eine Gitteroberfläche größer als eine Oberfläche hat, die einer Summe der Hauptoberflächen mehrerer Elementardetektoren (32, 320, 62, 82, 92) ein und derselben Untergruppe (300, 300', 600) entspricht.

**10.** Vorrichtung nach einem der Ansprüche 1 bis 9, bei der die Zwischenverbindungen (301, 302, 66, 85), die jeweils die Impedanzanpassungsvorrichtung mit einem Elementardetektor (32, 320, 62, 82, 92) verbinden, im Wesentlichen identische Abmessungen aufweisen.

**11.** Vorrichtung nach einem der Ansprüche 1 bis 9, bei der bei wenigstens einer Zwischenverbindung (301, 302, 66, 85) der Widerstand bezüglich des Widerstands erhöht oder verringert ist, den sie hätte, wenn sie den Elementardetektor (32, 320, 62, 82, 92) mit einem gegebenen Anschluss der Impedanzanpassungsvorrichtung (33, 33', 63, 83, 93) durch einen kürzest möglichen Weg in mikroelektronischer Technologie verbinden würde, wobei wenigstens ein Elementardetektor (32, 320, 62, 82, 92) weiter entfernt ist von dem Anschluss der Impedanzanpassungsvorrichtung (33, 33', 63, 83, 93) als ein anderer Elementardetektor (32, 320, 62, 82, 92) der gleichen Untergruppe (300, 300', 600).

**12.** Vorrichtung nach Anspruch 11, bei der wenigstens eine Zwischenverbindung mit gegebener Länge, die die Impedanzanpassungsvorrichtung mit einem Elementardetektor verbindet, wenigstens auf einem Teil ihrer Länge einen Querschnitt hat, der verschieden ist von wenigstens einem Teil einer anderen Zwischenverbindung, die die Impedanzanpassungsvorrichtung mit einem anderen Elementardetektor der gleichen Untergruppe verbindet.

**13.** Vorrichtung nach Anspruch 12, bei der die Zwischenverbindung (301, 302, 66, 85), die die Impedanzanpassungsvorrichtung mit einem Elementardetektor verbindet, die einen erhöhten Widerstand und eine gegebene Länge hat, wenigstens auf einem Teil ihrer Länge eine Querschnittsverengung umfasst.

**14.** Vorrichtung nach einem der Ansprüche 1 bis 13, bei der die Elementardetektoren (32, 320, 62, 82, 92) in einer Matrix angeordnet sind, die Zeilen und Spalten von Elementardetektoren umfasst, wobei die Untergruppe (300, 300', 600) verschiedene Elementardetektoren (32, 320, 62, 82, 92) umfasst, die auf mehreren Zeilen angeordnet sind, und verschiedene Elementardetektoren (32, 320, 62, 82, 92), die auf mehreren Spalten der Matrix angeordnet sind.

**15.** Vorrichtung nach einem der Ansprüche 1 bis 14, bei der die Elementardetektoren (32, 320, 62, 82, 92) ein und derselben Untergruppe (300, 300' 600) gemäß einer Axialsymmetrie gegebener Ordnung angeordnet sind.

**Claims**

**1.** An electromagnetic radiation detection device including multiple elementary detectors (32, 320, 62, 82, 92) grouped into one or more sub-assemblies (300, 300', 600), each including several elementary detectors, where each elementary detector (32, 320, 62, 82, 92) is connected by an interconnection (301, 302, 66, 85) to an impedance-matching device (33, 33', 63, 83, 93) adapted for making the impedance-matching between said elementary detector and a capture and shaping circuit, **characterised in that**:

the impedance-matching device (33, 33', 63, 83, 93) is common to all the elementary detectors (32, 320, 62, 82, 92) of a single sub-assembly (300, 300', 600),
in each sub-assembly (300, 300', 600) the interconnections (301, 302, 66, 85) have a roughly identical resistance value.

**2.** A device according to claim 1, in which the elementary detectors (32, 320, 62, 82, 92) are bolometers or microbolometers, photodiodes or photoconductors.

**3.** A device according to claim 2, in which, when the elementary detectors (32, 320, 62, 82, 92) are photodiodes, the impedance-matching device (33, 33', 63, 83, 93) is connected to a capture and shaping circuit (5, 5') common to all the elementary detectors (32, 320, 62, 82, 92) of a single sub-assembly (300, 300', 600).

**4.** A device according to one of the claims 1 or 2, where the impedance-matching device (33, 33', 63, 83, 93) is connected to a capture and shaping circuit (5, 5') common to several sub-assemblies (300, 300', 600).

5. A device according to one of the claims 1 to 4, in which each elementary detector (32, 320, 62, 82, 92) is in series with a switch (34, 340, 64) which is specific to it, and where the switches of a given sub-assembly (300, 300', 600) take a closed position sequentially, such that a read bus (B1, B2, B2') connected to the impedance-matching device (33, 33', 63, 83, 93) receives a signal originating from a single elementary detector (32, 320, 62, 82, 92) at once.

6. A device according to one of the claims 1 to 5, in which the impedance-matching device (33, 33', 63, 83, 93) is a directly injected transistor operating in saturation, called a matching transistor, where the elementary detectors (32, 320, 62, 82, 92) are connected to a source electrode (631, 7310, 831, 931) of the matching transistor (32, 320, 62, 82, 92).

7. A device according to one of the claims 1 to 6, in which the elementary detectors (32, 320, 62, 82, 92) define a first plane (G), different from a second plane (G') including the impedance-matching device (33, 33', 63, 83, 93), where the two planes (G, G') are positioned one above the other, and where the impedance-matching device (33, 33', 63, 83, 93) is facing at least some of the elementary detectors (32, 320, 62, 82, 92).

8. A device according to claim 7 in its application to claim 6, in which the matching transistor (33, 33', 63, 83, 93) has a gate area greater than a main area of an elementary detector (32, 320, 62, 82, 92) of the sub-assembly (300, 300', 600).

9. A device according to claim 8, in which the matching transistor (33, 33', 63, 83, 93) has a gate area greater than an area corresponding to a sum of the main areas of several elementary detectors (32, 320, 62, 82, 92) of a given sub-assembly (300, 300', 600).

10. A device according to one of the claims 1 to 9, in which the interconnections (301, 302, 66, 85), each connecting the impedance-matching device to an elementary detector (32, 320, 62, 82, 92), are of roughly identical dimensions.

11. A device according to one of the claims 1 to 9, in which at least one interconnection (301, 302, 66, 85) has its resistance increased or reduced, compared to the resistance which it would have had if it connected the elementary detector (32, 320, 62, 82, 92) to a given terminal of the impedance-matching device (33, 33', 63, 83, 93) by as short as possible a path in microelectronics technology, and where at least one elementary detector (32, 320, 62, 82, 92) is further from the terminal of the impedance-matching device (33, 33', 63, 83, 93) than another elementary detector (32, 320, 62, 82, 92) of the same sub-assembly (300, 300', 600).

12. A device according to claim 11, in which at least one interconnection of a given length, connecting the impedance-matching device to an elementary detector, has, over at least a part of its length, a section different from at least a part of another interconnection connecting the impedance-matching device to another elementary detector of the same sub-assembly.

13. A device according to claim 12, in which the interconnection (301, 302, 66, 85), connecting the impedance adaptation device to an elementary detector, having an increased resistance and a given length, has a narrowing of its section over at least a part of its length.

14. A device according to one of the claims 1 to 13 in which, with the elementary detectors (32, 320, 62, 82, 92) being arranged in a matrix including lines and columns of elementary detectors, the sub-assembly (300, 300', 600) includes different elementary detectors (32, 320, 62, 82, 92) located over several lines and different elementary detectors (32, 320, 62, 82, 92) located over several columns of the matrix.

15. A device according to one of the claims 1 to 14, in which the elementary detectors (32, 320, 62, 82, 92) of a given sub-assembly (300, 300', 600) are arranged with an axial symmetry of a given order.

1

3

2

I

FIG. 1

FIG. 2

EP 2 378 258 B1

FIG. 3

EP 2 378 258 B1

FIG. 5

FIG. 4

FIG. 6A

FIG. 6B

P2

C65

62'

632

631

633

B2

63

EP 2 378 258 B1

29

FIG. 7

EP 2 378 258 B1

80

82

85

832

831

833

FIG. 8

5

83

FIG. 9

EP 2 378 258 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7679048 B
- US 6028309 B

**Littérature non-brevet citée dans la description**

- **M.J. HEWITT ; J.L. VAMPOLA ; S.H. BLACK ; C.J. NIELSEN.** Infrared readout electronics: a historical perspective. *Proc. of SPIE Vol. 2226 Infrared Readout Electronics II,* 1994, vol. 2226, 108-119
- **J.L. TISSOT ; F. ROTHAN ; C. VEDEL ; M. VILAIN ; JJ. YON.** LETI/LIR' amorphous silicon unccooled microbolometer development. *Proc. of SPIE Vol. 3379 Infrared Detectors and Focal Plane Arrays V,* 1998, vol. 3379, 139-144